(19) Europäisches Patentamt
European Patent Office
Office européen des brevets

(11) **EP 4 746 540 A1**

(12) **EUROPEAN PATENT APPLICATION**
published in accordance with Art. 153(4) EPC

(43) Date of publication:
**20.05.2026 Bulletin 2026/21**

(51) International Patent Classification (IPC):
*H04W 52/18* (2009.01)     *H04W 16/28* (2009.01)
*H04W 24/10* (2009.01)     *H04W 28/16* (2009.01)

(21) Application number: **24839439.7**

(52) Cooperative Patent Classification (CPC):
**H04W 16/28; H04W 24/10; H04W 28/16;
H04W 52/18**

(22) Date of filing: **19.06.2024**

(86) International application number:
**PCT/JP2024/022155**

(87) International publication number:
**WO 2025/013543 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.07.2023 JP 2023114636**

(71) Applicant: **Sony Group Corporation
Tokyo 108-0075 (JP)**

(72) Inventors:
• **MATSUDA, Hiroki
Tokyo 108-0075 (JP)**

• **FUNAKI, Yuji
Tokyo 108-0075 (JP)**
• **KIMURA, Ryota
Tokyo 108-0075 (JP)**
• **HARADA, Hiroshi
Kyoto-shi, Kyoto 606-8501 (JP)**
• **MIZUTANI, Keiichi
Kyoto-shi, Kyoto 606-8501 (JP)**
• **FUKUSHIMA, Keita
Kyoto-shi, Kyoto 606-8501 (JP)**

(74) Representative: **2SPL Patentanwälte PartG mbB
Landaubogen 3
81373 München (DE)**

(54) **TERMINAL DEVICE, COMMUNICATION DEVICE, BASE STATION, AND COMMUNICATION METHOD**

(57)     A terminal device of the present disclosure includes a communication unit and a control unit. The communication unit communicates with a plurality of communication apparatuses. The control unit measures communication quality and/or propagation path characteristics with one or more communication apparatuses. The control unit transmits data to one or more communication apparatuses at transmission power determined based on the communication quality and/or the propagation path characteristics.

FIG.3

EP 4 746 540 A1

**Description**

Field

The present disclosure relates to a terminal device, a communication apparatus, a base station, and a communication method.

Background

Radio access systems and wireless networks for cellular mobile communication (hereinafter, also referred to as "long term evolution (LTE)", "LTE-advanced (LTE-A)", "LTE-advanced pro (LTE-A Pro)", "new radio (NR)", "new radio access technology (NRAT)", "evolved universal terrestrial radio access (EUTRA)", or "further EUTRA (FEUTRA)") have been studied in the 3rd generation partnership project (3GPP (registered trademark)).

Note that, in the following description, LTE includes LTE-A, LTE-A Pro, and EUTRA, and NR includes NRAT and FEUTRA. In LTE, a base station (base station device) is also referred to as an evolved node B (eNodeB), in NR, a base station (base station device) is also referred to as a gNodeB, and in LTE and NR, a terminal device (mobile station, mobile station device, and terminal) is also referred to as user equipment (UE). LTE and NR are cellular communication systems in which a plurality of areas covered by the base station is arranged in the form of cells. A single base station may manage a plurality of cells.

5G NR is a radio access technology (RAT) different from LTE, designed as a next-generation radio access system of LTE. NR is an access technology that can support various use cases including enhanced mobile broadband (eMBB), massive machine type communications (mMTC), and ultra reliable and low latency communications (URLLC). NR has been standardized to support a technical framework corresponding to usage scenarios, requirement conditions, arrangement scenarios, and the like in the use cases.

In recent years, discussions on next-generation wireless communication have been advanced. For next-generation wireless communication, there are requirements such as higher speed communication than 5G NR, low delay and high reliability communication, majority high density communication, and simultaneous support of the plurality of requirements. In order to achieve these requirements, further improvement in frequency utilization efficiency is required. One possible technique for improving the frequency utilization efficiency is to have a means in which a plurality of base stations cooperates to communicate with a terminal device to thereby enable efficient communication with the terminal device. The present technology enables more advanced spatial multiplexing and improves frequency utilization efficiency.

Citation List

Patent Literature

Patent Literature 1: JP 2016-502331 A
Patent Literature 2: JP 2016-213846 A

Summary

Technical Problem

As described above, the plurality of base stations cooperates to communicate with the terminal device, so that the frequency utilization efficiency can be further improved. At this time, it is necessary to examine a transmission power control means of the terminal device.

In the case of conventional communication in which cooperative control is not performed, the terminal device performs power control of uplink communication according to communication quality and/or propagation path characteristics of downlink communication with the base station. On the other hand, in a case where cooperative control is performed, the terminal device communicates with a plurality of base stations, and thus, it is not always possible to perform sufficient power control using the transmission power control similar to the conventional one.

In light of the above, the present disclosure provides a mechanism for a terminal device to perform transmission power control in communication in which cooperative control is performed.

Note that the above problem or object is merely one of a plurality of problems or objects that can be solved or achieved by a plurality of embodiments disclosed in the present specification.

Solution to Problem

A terminal device of the present disclosure includes a communication unit and a control unit. The communication unit communicates with a plurality of communication apparatuses. The control unit measures communication quality and/or propagation path characteristics with one or more communication apparatuses. The control unit transmits data to one or more communication apparatuses at transmission power determined based on the communication quality and/or the propagation path characteristics.

Brief Description of Drawings

FIG. 1 is a diagram illustrating provision of communication areas centered on infrastructure.
FIG. 2 is a diagram illustrating an example of a communication system according to an embodiment of the present disclosure.
FIG. 3 is a diagram illustrating an example of a communication scenario performed in a communication system according to an embodiment of the present disclosure.
FIG. 4 is a diagram illustrating an example of a communication scenario performed in a communication system according to an embodiment of the present disclosure.
FIG. 5 is a diagram illustrating the configuration of a base station according to an embodiment of the present disclosure.
FIG. 6 is a diagram illustrating the configuration of a transmission/reception device according to an embodiment of the present disclosure.
FIG. 7 is a diagram illustrating the configuration of a terminal device according to an embodiment of the present disclosure.
FIG. 8 is a diagram illustrating an example of a result of simulation of transmission power control according to an embodiment of the present disclosure.
FIG. 9 is a diagram illustrating another example of a result of simulation of transmission power control according to an embodiment of the present disclosure.
FIG. 10 is a diagram illustrating an example of a means for determining a transmission/reception device that is a communication partner according to an embodiment of the present disclosure.
FIG. 11 is a diagram illustrating another example of a means for determining a transmission/reception device that is a communication partner according to an embodiment of the present disclosure.
FIG. 12 is a sequence diagram illustrating an example of a flow of transmission power control according to an embodiment of the present disclosure.
FIG. 13 is a diagram illustrating an example of CU/DU/RU separation of functions of a base station according to another embodiment of the present disclosure.
FIG. 14 is a diagram illustrating an example of separation of processing according to a user-centric network of another embodiment of the present disclosure. Description of Embodiments

Hereinafter, embodiments of the present disclosure will be described in detail with reference to the appended drawings. Note that, in the specification and the appended drawings, structural elements that have substantially the same function and structure are denoted with the same reference numerals, and repeated explanation of these structural elements is omitted.

Further, in the specification and the drawings, similar constituent elements in the embodiments are sometimes distinguished by adding at least one of different alphabets or numbers after the same reference numerals. However, in a case where it is not necessary to particularly distinguish the similar constituent elements from one another, only the same reference numerals are given. For example, a plurality of configurations having substantially the same functional configuration is distinguished from one another as necessary, such as a first transmission/reception device 30_1 and a second transmission/reception device 30_2. For example, if it is not necessary to particularly distinguish between the first transmission/reception device 30_1 and the second transmission/reception device 30_2, they are simply referred to as transmission/reception devices 30.

In the description below, one or more embodiments (including examples, modifications, and application examples) can be implemented independently. On the other hand, at least some of the plurality of embodiments described below may be appropriately combined with at least some of other embodiments. The plurality of embodiments may include novel features different from each other. Therefore, the plurality of embodiments can contribute to solving different objects or problems, and can exhibit different effects.

<<1. Introduction>>

<1-1. User-centric network>

Discussions on next-generation wireless communication have been advanced. For next-generation wireless communication, there are requirements such as higher speed communication than 5G NR, low delay and high reliability communication, majority high density communication, and simultaneous support of the plurality of requirements. In order to achieve these requirements, further improvement in frequency utilization efficiency is required.

One possible approach for achieving such requirements is to shift from a conventional infrastructure-centered communication provision to a user-centric (or service-centric, or other term) communication provision. For example, it is expected that an ultra-high density (majority high density) distributed antenna environment will be provided in the future, and the utilization of further advanced spatial separation technology using the ultra-high density distributed antenna environment is anticipated.

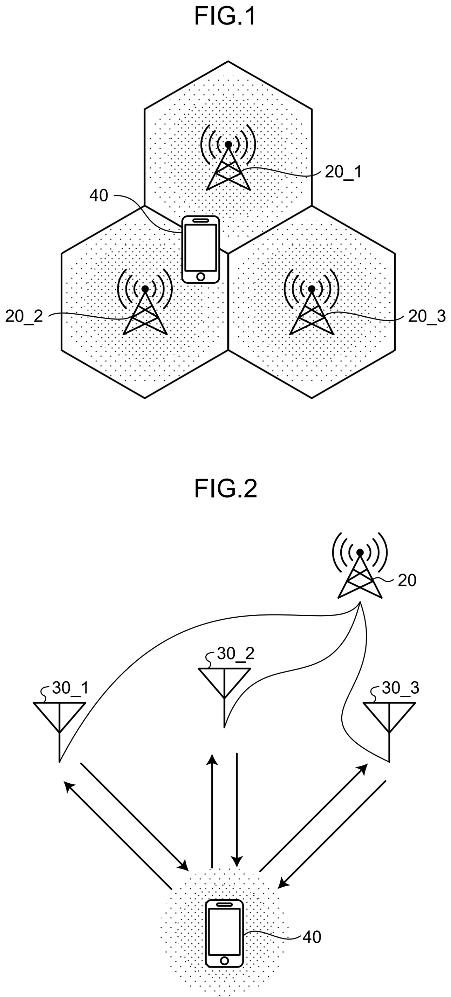

FIG. 1 is a diagram illustrating provision of communication areas centered on infrastructure. In the conventional provision of communication areas centered on infrastructure, a communication area is provided with a base station 20 on the network side at the center. The conventional provision of communication area is a means for providing communication in a geographically exhaustive manner. In such a case, a terminal device 40 determines the base station 20 to be communicated based on an area in which communication is performed, and communication quality and/or propagation path characteristics.

FIG. 2 is a diagram illustrating an example of a communication system according to an embodiment of the present disclosure. The communication system includes a base station 20, a plurality of transmission/reception devices 30, and a terminal device 40. In the communication system illustrated in FIG. 2, a user-centric network is formed.

The user-centric network technology illustrated in FIG. 2 is a technology for providing terminal device 40-centric communication using the base station 20 and/or one or more transmission/reception devices 30 connected to the base station 20.

The user-centric network technology is characterized by providing optimal communication to the terminal device 40, unlike conventional communication technologies for providing a predetermined communication area. For example, in the user-centric network, the plurality of transmission/reception devices 30 is cooperatively controlled to communicate with the terminal device 40.

Here, a case where the number of transmission/reception devices 30 is three is illustrated, but the number of transmission/reception devices 30 may be two or four or more. Further, the number of terminal devices 40 may be plural.

Here, the user-centric network is formed by the base station 20 and/or one or more transmission/reception devices 30, but devices constituting the user-centric network are not limited thereto.

For example, the user-centric network may be formed by a transmission/reception antenna extended from the base station 20 instead of the transmission/reception device 30. In the following description, the term "transmission/reception device" may be replaced with "transmission/reception antenna" as appropriate. In addition, the term "transmission/reception device" may be replaced with "base station" as appropriate, and the term "base station" may be replaced with "transmission/reception device" as appropriate. Hereinafter, when the term "transmission power control" is simply used, it means transmission power control in the uplink performed by the terminal device 40.

<1-2. Problems in user-centric network>

One of problems in a user-centric network in a majority high density distributed antenna environment is transmission power control of the terminal device 40.

In conventional transmission power control, transmission power is controlled by target reception power, the number of resource blocks (RBs), a path loss (propagation loss), a modulation and coding scheme (MCS), and dynamic adjustment by a closed loop. For example, the terminal device 40 performs transmission power control using Formula (1).

$$P_{PUSCH,b,f,c}(i,j,q_d,l)$$
$$= min \begin{cases} P_{CMAX,f,c}(i), \\ P_{O\_PUSCH,b,f,c}(j) + 10log_{10}\left(2^{\mu} \cdot M^{PUSCH}_{RB,b,f,c}(i)\right) + \alpha_{b,f,c}(j) \cdot PL_{b,f,c}(q_d) + \Delta_{TF,b,f,c}(i) + f_{b,f,c}(i,l) \end{cases}$$

$$\cdots (1)$$

$P_{CMAX,f,c}(i)$ in Formula (1) indicates the maximum value of the transmission power that the terminal device 40 can output. $P_{O\_PUSCH,b,f,c}(j)$ indicates the target reception power in the base station 20, and $10log_{10}(2^{\mu} \cdot M^{PUSCH}_{RB,b,f,c}(i)$ indicates the number of resource blocks (the number of RBs). $\alpha_{b,f,c}(j) \cdot PL_{b,f,c}(q_d)$ is a path loss compensation term. $\Delta_{TF,b,f,c}$

(i) indicates an MCS offset, and $f_{b,f,c}(i, I)$ indicates closed-loop adjustment.

Here, in a case where the terminal device 40 performs cooperative communication with the base station 20 and/or one or more transmission/reception devices 30, calculating path loss compensation becomes a problem. In general, the path loss compensation is calculated using downlink propagation loss values of the base station 20 and the terminal device 40 forming the serving cell. The following describes differences between cooperative communication and conventional communication by presenting some scenarios in a distributed antenna environment.

In the user-centric network, it is conceivable that the terminal device 40 simultaneously communicates with the plurality of transmission/reception devices 30 in the distributed antenna environment. For example, the following communication scenarios are conceivable. Of course, the scenarios presented below are merely examples, and the proposed technology can be applied to scenarios other than the following scenarios.

(Communication Scenario 1)

For example, the communication scenario 1 is a scenario in which the same transmission/reception devices 30 and the terminal device 40 communicate in downlink and uplink communication (see FIG. 2).

In the conventional communication system, path loss compensation for transmission power control is implemented using a propagation loss between the base station 20 and the terminal device 40 in the serving cell. On the other hand, in the communication scenario 1, the serving cell is not uniquely determined, and a plurality of transmission/reception devices 30 cooperates to form a communication area suitable for the terminal device 40. At this time, it is difficult to directly apply the path loss compensation term used in the conventional calculation means to the transmission power control, and path loss compensation calculation suitable for this scenario is required.

(Communication Scenario 2)

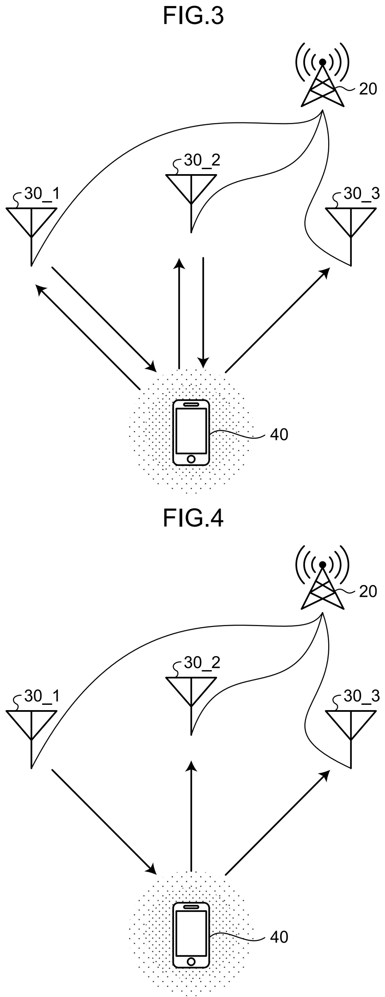

FIG. 3 is a diagram illustrating an example of the communication scenario 2 performed in a communication system according to an embodiment of the present disclosure.

According to the communication scenario 2, in the downlink and uplink communication, the downlink communication is performed between some of the plurality of transmission/reception devices 30 (the first transmission/reception device 30_1 and the second transmission/reception device 30_2 in the example of FIG. 3) and the terminal device 40. In addition, the uplink communication is performed between the terminal device 40 and, among the plurality of transmission/reception devices 30, the transmission/reception devices 30 (the first transmission/reception device 30_1 to a third transmission/reception device 30_3 in the example of FIG. 3) partially different from the transmission/reception devices 30 used in the downlink communication.

As described above, in the present scenario, some of the transmission/reception devices 30 that perform uplink communication are different from the transmission/reception devices 30 that perform downlink communication. That is, there are transmission/reception devices 30 that perform uplink communication but do not perform downlink communication with the terminal device 40, or perform downlink communication but do not perform uplink communication with the terminal device 40.

Here, the number of transmission/reception devices 30 that perform downlink communication is two, and the number of transmission/reception devices 30 that perform uplink communication is three. However, these numbers are not limited to two or three. The number of transmission/reception devices 30 that perform downlink communication may be one or three or more. The number of transmission/reception devices 30 that perform uplink communication may be two or less or four or more. Further, the number of transmission/reception devices 30 that perform uplink communication may be the same as or smaller than the number of transmission/reception devices 30 that perform downlink communication.

As described above, in the present scenario, some of the transmission/reception devices 30 that perform communication in downlink communication and uplink communication are different. Therefore, in a case where path loss compensation in downlink communication is directly applied to transmission power control, there is a possibility that optimal path loss compensation cannot be performed in uplink communication.

(Communication Scenario 3)

FIG. 4 is a diagram illustrating an example of the communication scenario 3 performed in a communication system according to an embodiment of the present disclosure.

According to the communication scenario 3, in the downlink and uplink communication, the downlink communication is performed between some of the plurality of transmission/reception devices 30 (the first transmission/reception device 30_1 in the example of FIG. 3) and the terminal device 40. In addition, the uplink communication is performed between the terminal device 40 and, among the plurality of transmission/reception devices 30, the transmission/reception devices 30 (the second transmission/reception device 30_2 and the third transmission/reception device 30_3 in the example of FIG. 3) different from the transmission/reception devices 30 used in the downlink communication.

As described above, in the present scenario, the transmission/reception devices 30 that perform uplink communication are different from the transmission/reception devices 30 that perform downlink communication. That is, the transmission/reception device 30 that performs uplink communication with the terminal device 40 does not perform downlink communication. Further, the transmission/reception device 30 that performs downlink communication does not perform uplink communication.

Here, the number of transmission/reception devices 30 that perform downlink communication is one, and the number of transmission/reception devices 30 that perform uplink communication is two. However, these numbers are not limited to one or two. The number of transmission/reception devices 30 that perform downlink communication may be two or more. The number of transmission/reception devices 30 that perform uplink communication may be one or three or more. Further, the number of transmission/reception devices 30 that perform uplink communication may be the same as or smaller than the number of transmission/reception devices 30 that perform downlink communication.

As described above, in the present scenario, all of the transmission/reception devices 30 that perform communication in downlink communication and uplink communication are different. Therefore, in a case where path loss compensation in downlink communication is directly applied to transmission power control, there is a possibility that optimal path loss compensation cannot be performed in uplink communication.

<1-3. Outline of proposed technology>

In light of the above, the terminal device 40 according to the proposed technology of the present disclosure includes a communication unit and a control unit. The communication unit communicates with a plurality of transmission/reception devices 30 (an example of a communication apparatus). The control unit measures communication quality and/or propagation path characteristics with one or more transmission/reception devices 30. The control unit transmits data to one or more communication apparatuses at transmission power determined based on the communication quality and/or the propagation path characteristics.

This enables the terminal device 40 to perform transmission power control to thereby perform uplink communication.

<1-4. Terms used in embodiments>

The base station 20 in the present embodiment may be a ground base station, or may be a non-ground base station that operates as a communication apparatus, such as a satellite station, a drone, a balloon, or an airplane.

The resource in the present embodiment represents a frequency, a time, a resource element (including REG, CCE, CORESET), a resource block, a bandwidth part, a component carrier, a symbol, a sub-symbol, a slot, a mini-slot, a subslot, a subframe, a frame, a PRACH occasion, an occasion, a code, a multi-access physical resource, a multi-access signature, a subcarrier spacing (numerology), or the like.

In the present embodiment, the transmission/reception device 30 may be rephrased as a base station device, a relay station, an antenna (radio unit (RU)), a reconfigurable intelligent surface (RIS), or the like.

In the present embodiment, the propagation path characteristics include one or a plurality of the following.

- Propagation loss (path loss)
- Shadowing
- Fading
- Channel matrix information
- Combination of one or more of the above (which may be calculated by an operation such as addition, multiplication, division, or subtraction.)

In the present embodiment, the communication quality includes one or a plurality of the following.

- Reference signal received power (RSRP)
- Received signal strength indicator (RSSI)
- Reference signal received quality (RSRQ)
- Signal to noise ratio (SNR)
- Signal to interference plus noise ratio (SINR)
- Channel quality indicator (CQI)
- Precoding matrix indicator (PMI)
- Rank indicator (RI)
- Combination of one or more of the above (which may be calculated by an operation such as addition, multiplication, division, or subtraction.)

<<2. Configuration of communication system>>

<2-1. Configuration of base station>

The base station 20 is a wireless communication apparatus that performs wireless communication with other wireless communication apparatuses (for example, the transmission/reception device 30, the terminal device 40, or another base station 20). The base station 20 may wirelessly communicate with the terminal device 40 via the transmission/reception device 30, or may directly communicate wirelessly with the terminal device 40.

The base station 20 is a device corresponding to a radio base station (base station, Node B, eNB, gNB, 6GNB, or the like) or a radio access point. The base station 20 may be a wireless relay station. The base station 20 may be an optical extension device called a remote radio head (RRH). The base station 20 may be a receiving station such as a field pickup unit (FPU). The base station 20 may be an integrated access and backhaul (IAB) donor node or an IAB relay node that provides a radio access line and a radio backhaul line by time division multiplex, frequency division multiplex, or spatial division multiplex.

The radio access technology used by the base station 20 may be a cellular communication technology. The radio access technology used by the base station 20 may be a wireless LAN technology. The radio access technology used by the base station 20 may be a low power wide area (LPWA) communication technology. However, the radio access technology used by the base station 20 is not limited thereto, and may be another radio access technology. The wireless communication used by the base station 20 may be wireless communication using a millimeter wave or wireless communication using a tera wave (terahertz wave). The wireless communication used by the base station 20 may be wireless communication using radio waves or wireless communication (optical) using infrared rays or visible light. Further, the base station 20 may be capable of non-orthogonal multiple access (NOMA) communication with the terminal device 40. Here, the NOMA communication is communication using a non-orthogonal resource (transmission, reception, or both). Note that the base station 20 may be able to perform the NOMA communication with another base station 20.

Note that the base stations 20 may be capable of communicating with each other via a base station-core network interface (for example, NG Interface and S1 Interface). The interface may be either a wired interface or a wireless interface. Further, the base stations 20 may be capable of communicating with each other via the interbase station interface (for example, Xn interface, X2 interface, or F1 interface). The interface may be either a wired interface or a wireless interface.

The concept of the base station (also referred to as a "base station device") includes not only a donor base station but also a relay base station (also referred to as a "relay station"). The relay base station may be any one of RF repeater, smart repeater, and intelligent surface. The concept of the base station also includes, in addition to a structure having a function of the base station 20, a device installed in the structure.

The structure is, for example, a building such as a high-rise building, a house, a steel tower, a station facility, an airport facility, a harbor facility, an office building, a school building, a hospital, a factory, a commercial facility, or a stadium. The concept of the structure also includes a construction (non-building structure) such as a tunnel, a bridge, a dam, a wall, and an iron pillar, and equipment such as a crane, a gate, and a windmill in addition to buildings. The concept of the structure also includes a structure on water such as a platform or a megafloat, and a structure under water such as an ocean observation facility in addition to the structure on land (on the ground in a narrow sense) or underground. The base station 20 can also be rephrased as an information processor.

The base station 20 may be a donor station or a relay station. Further, the base station 20 may be a fixed station or a mobile station. The mobile station is a wireless communication apparatus (for example, the base station 20) configured to be movable. In this case, the base station 20 may be a device installed in a mobile body or may be a mobile body itself. For example, a relay station having mobility can be regarded as the base station 20 as a mobile station. Further, a mobility device with a function of the base station 20 (at least a part of the function of the base station 20), for example, a vehicle, an unmanned aerial vehicle (UAV) typified by a drone, or a smartphone, also corresponds to the base station 20 as the mobile station.

Here, the mobile body may be a mobile terminal such as a smartphone or a mobile phone. The mobile body may be a mobile body (for example, vehicle including an automobile, a bicycle, a bus, a truck, a motorcycle, a train, or a linear motor car) that travels on land (on the ground in a narrow sense) or a mobile body (for example, subway) that travels underground (for example, inside tunnel). In addition, the mobile body may be a mobile body that travels on water (for example, ship such as a passenger ship, a cargo ship, or a hovercraft) or a mobile body that moves under water (for example, submersibles such as a submersible vessel, a submarine, or an unmanned submarine). Still more, the mobile body may be a mobile body that moves in the atmosphere (for example, aircraft such as an airplane, an airship, or a drone).

The base station 20 may be a ground base station (ground station) installed on the ground. The base station 20 may also be a base station installed in a structure on the ground, or may be a base station installed in a mobile body moving on the ground. The base station 20 may also be an antenna installed in a structure such as a building and a signal processing device connected to the antenna. The base station 20 may also be the structure or the mobile body itself. The "ground" is a ground in a broad sense including not only land (on the ground in a narrow sense) but also underground, on water, and underwater. The base station 20 is not limited to the ground base station. In a case where the communication system 1 is a satellite communication system, the base station 20 may be an aircraft station. From the perspective of a satellite station, the aircraft station located on the earth is a ground station.

The base station 20 is not limited to the ground station. The base station 20 may be a non-ground base station device (non-ground station) capable of floating in the air or space. For example, the base station 20 may be an aircraft station or a satellite station.

The satellite station is a satellite station capable of floating outside the atmosphere. The satellite station may be a device mounted on a space mobile body such as an artificial satellite, or may be the space mobile body itself. The space mobile body is a mobile body that moves outside the atmosphere. Examples of the space mobile body include artificial bodies such as an artificial satellite, a spacecraft, a space station, and a probe. The satellite serving as the satellite station may be any of a low earth orbiting (LEO) satellite, a medium earth orbiting (MEO) satellite, a geostationary earth orbiting (GEO) satellite, or a highly elliptical orbiting (HEO) satellite. The satellite station may be a device mounted on the low earth orbiting satellite, the medium earth orbiting satellite, the geostationary earth orbiting satellite, or the highly elliptical orbiting satellite.

The aircraft station is a wireless communication apparatus capable of floating in the atmosphere, such as an aircraft. The aircraft station may be a device mounted on an aircraft or the like, or may be the aircraft itself. The concept of the aircraft includes not only heavy aircraft such as airplanes or gliders, but also light aircraft such as balloons or airships. The concept of the aircraft also includes not only heavy or light aircraft, but also rotorcraft such as helicopters or autogyros. The aircraft station or the aircraft on which the aircraft station is mounted may be an unmanned aerial vehicle such as a drone.

The concept of the unmanned aerial vehicle includes unmanned aircraft systems (UAS) and a tethered UAS. The concept of the unmanned aerial vehicle also includes lighter than air (LTA) UAS and heavier than air (HTA) UAS. The concept of the unmanned aerial vehicle also includes high altitude UAS platforms (HAPs).

The size of the coverage of the base station 20 may be relatively large such as a macro cell or may be relatively small such as a picocell. The size of the coverage of the base station 20 may be extremely small such as a femtocell. The base station 20 may have a beamforming function. At this time, in the base station 20, a cell or a service area may be formed for each beam. Further, the base station 20 may have a pointforming function. The pointforming is a technique of concentrating power (power concentration technique) at the specific point, using the phase difference of the near field. At this time, in the base station 20, the cell or the service area may be formed for each point.

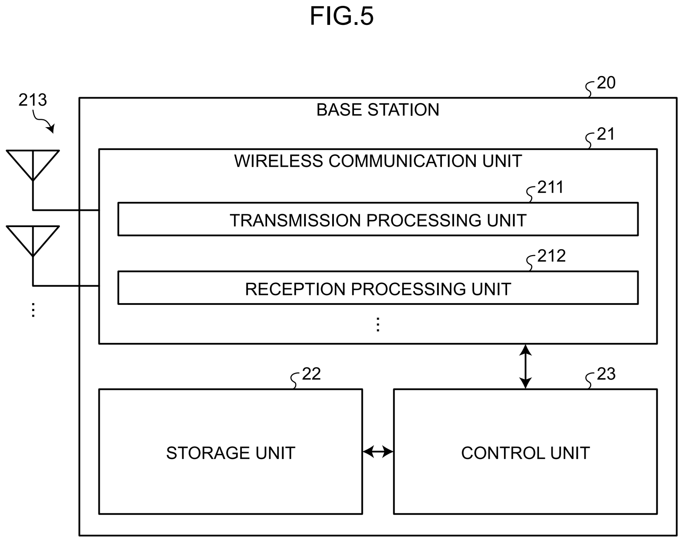

FIG. 5 is a diagram illustrating the configuration of the base station 20 according to an embodiment of the present disclosure. The base station 20 includes a wireless communication unit 21, a storage unit 22, and a control unit 23. The configuration illustrated in FIG. 5 is a functional configuration, and a hardware configuration may be different from the functional configuration. Further, the functions of the base station 20 may be implemented in a distributed manner in a plurality of physically separated configurations.

The wireless communication unit 21 is a signal processing unit for wirelessly communicating with another wireless communication apparatus (for example, the transmission/reception device 30, the terminal device 40, or another base station 20). The wireless communication unit 21 is controlled by the control unit 23. The wireless communication unit 21 corresponds to one or more radio access systems. The wireless communication unit 21 may support at least one of NR, LTE, and 6G. The wireless communication unit 21 may support W-CDMA, cdma 2000, and the like in addition to NR, LTE, and 6G. The wireless communication unit 21 may also support an automatic retransmission technology such as a hybrid automatic repeat request (HARQ).

The wireless communication unit 21 includes a transmission processing unit 211, a reception processing unit 212, and an antenna 213. The wireless communication unit 21 may include a plurality of transmission processing units 211, a plurality of reception processing units 212, and a plurality of antennas 213. In a case where the wireless communication unit 21 supports a plurality of radio access systems, each part of the wireless communication unit 21 can be configured individually for each of the radio access systems. The transmission processing unit 211 and the reception processing unit 212 may be individually configured for LTE, NR, and 6G. The transmission processing unit 211 and the reception processing unit 212 may be individually configured for a cellular communication system and another communication system (for example, Wi-Fi (registered trademark) or Bluetooth (registered trademark)). The antenna 213 may include a plurality of antenna elements, for example, a plurality of patch antennas. The wireless communication unit 21 may have the beamforming function. For example, the wireless communication unit 21 may have a polarization beamforming function (or a polarization beamforming function using dual-polarized waves in polarization directions at 45 degrees and -45 degrees from the vertical direction) using vertically polarized waves (V-polarized waves) and horizontally polarized waves (H-polarized waves). Further, the wireless communication unit 21 may have the pointforming function.

The transmission processing unit 211 performs transmission processing of downlink control information and downlink data. For example, the transmission processing unit 211 encodes the downlink control information and the downlink data input from the control unit 23 using an encoding system such as block encoding, convolutional encoding, or turbo encoding. Here, the encoding may be performed by polar code encoding or low density parity check code (LDPC code) encoding. Then, the transmission processing unit 211 modulates coded bits by a predetermined modulation scheme such as BPSK, QPSK, 16QAM, 64QAM, or 256QAM. In this case, signal points on constellation do not necessarily have to be equidistant. The constellation may be a non-uniform constellation (NUC). The transmission processing unit 211 multiplexes a modulation symbol of each channel and a downlink reference signal, and arranges the resultant in a predetermined resource element. Then, the transmission processing unit 211 performs various types of signal processing on the multiplexed signal. For example, the transmission processing unit 211 performs processing such as conversion into a frequency domain using fast Fourier transform, addition of a guard interval (cyclic prefix), generation of a baseband digital signal, conversion into an analog signal, quadrature modulation, up-conversion, removal of an unnecessary frequency component, and power amplification. A signal generated by the transmission processing unit 211 is transmitted from the antenna 213.

The reception processing unit 212 processes the uplink signal received via the antenna 213. For example, the reception processing unit 212 performs, on the uplink signal, down-conversion, removal of an unnecessary frequency component, control of an amplification level, quadrature demodulation, conversion into a digital signal, removal of a guard interval (cyclic prefix), extraction of a frequency domain signal using fast Fourier transform, and the like. Then, the reception processing unit 212 separates an uplink channel, such as a physical uplink shared channel (PUSCH) and a physical uplink control channel (PUCCH), and an uplink reference signal from the signal that has been subjected to the above processing. Further, the reception processing unit 212 demodulates a received signal using a modulation scheme such as binary phase shift keying (BPSK) or quadrature phase shift keying (QPSK) with respect to a modulation symbol of the uplink channel. The modulation scheme used for demodulation may be 16-quadrature amplitude modulation (16QAM), 64QAM, or 256QAM. In this case, signal points on constellation do not necessarily have to be equidistant. The constellation may be a non-uniform constellation (NUC). The reception processing unit 212 then decodes encoded bits of a demodulated uplink channel. The decoded uplink data and uplink control information are output to the control unit 23.

The antenna 213 is an antenna device that mutually converts a current and a radio wave. The antenna 213 may be configured with one antenna element. The antenna 213 may be configured with a plurality of antenna elements. In a case where the antenna 213 is configured with a plurality of antenna elements, the wireless communication unit 21 may have the beamforming function. At this time, the wireless communication unit 21 may be configured to generate a directional beam by controlling the directivity of the wireless signal using the plurality of antenna elements.

Note that the antenna 213 may be a dual-polarized antenna. In a case where the antenna 213 is the dual-polarized antenna, the wireless communication unit 21 may use vertically polarized waves (V-polarized waves) and horizontally polarized waves (H-polarized waves) (or dual-polarized waves in polarization directions at 45 degrees and -45 degrees from the vertical direction) when transmitting a wireless signal. The wireless communication unit 21 may control the directivity of the radio signal transmitted using the vertically polarized waves and the horizontally polarized waves (or dual-polarized waves in the polarization directions at 45 degrees and -45 degrees from the vertical direction). Further, the wireless communication unit 21 may transmit and receive spatially multiplexed signals via a plurality of layers including the plurality of antenna elements.

The storage unit 22 is a storage device capable of reading and writing data, such as a DRAM, an SRAM, a flash memory, or a hard disk.

The control unit 23 is a controller that controls each unit of the base station 20. The control unit 23 controls the wireless communication unit 21 to perform wireless communication with another wireless communication apparatus (for example, the transmission/reception device 30, the terminal device 40, or another base station 20).

The control unit 23 may be implemented by, for example, a processor such as a central processing unit (CPU) or a micro processing unit (MPU). Specifically, the control unit 23 may be implemented by a processor executing various programs stored in a storage device inside the base station 20 using a random access memory (RAM) or the like as a work area. The control unit 23 may be implemented, for example, by an integrated circuit such as an application specific integrated circuit (ASIC) or a field programmable gate array (FPGA). Further, the control unit 23 may be implemented by a graphics processing unit (GPU). Any of the CPU, the MPU, the ASIC, the FPGA, and the GPU can be regarded as the controller. Note that the control unit 23 may include a plurality of physically separated objects. For example, the control unit 23 may include a plurality of semiconductor chips.

Note that, in some embodiments, the base station 20 may be configured by a set of a plurality of physical or logical devices. As an example, the base station 20 in this embodiment may be distinguished into a plurality of devices such as a baseband unit (BBU) and an RU. The base station 20 may be interpreted as a set of the plurality of devices. In addition, the base station 20 may be either or both of the BBU and the RU. The BBU and the RU may be connected by a predetermined interface, for example, an enhanced common public radio interface (eCPRI).

The RU may be rephrased as a remote radio unit (RRU) or a radio DoT (RD). The RU may correspond to a gNB distributed unit (gNB-DU) described later. The BBU may correspond to a gNB central unit (gNB-CU) described later. The RU may be a device integrally formed with the antenna. The antenna of the base station 20, for example, an antenna integrally formed with the RU, may adopt an advanced antenna system and support MIMO, such as FD-MIMO, or beamforming. In addition, the antenna of the base station 20 may support pointforming. The antenna of the base station 20 may include, for example, 64 transmission antenna ports and 64 reception antenna ports.

The antenna mounted on the RU may be an antenna panel configured with one or more antenna elements, and the RU may be equipped with one or more antenna panels. The RU may be equipped with two types of antenna panels, i.e., a horizontally polarized antenna panel and a vertically polarized antenna panel. The RU may be equipped with two types of antenna panels, i.e., a right-handed circularly polarized antenna panel and a left-handed circularly polarized antenna panel, or an antenna panel with a polarization direction of 45 degrees from the vertical direction and an antenna panel with a polarization direction of -45 degrees from the vertical direction. A plurality of antennas having the plurality of polarization directions may be mounted on one antenna panel. The RU may form and control an independent beam for each antenna panel.

A plurality of the base stations 20 may be connected to each other. One or more base stations 20 may be included in a radio access network (RAN). At this time, the base station 20 may be simply referred to as a RAN, a RAN node, an access network (AN), an AN node, or the like. The RAN in LTE may be referred to as an enhanced universal terrestrial RAN (EUTRAN). The RAN in NR may be referred to as NGRAN. In addition, the RAN in 6G may be referred to as 6GRAN. The RAN in W-CDMA (UMTS) may be referred to as UTRAN.

The base station 20 of LTE may be referred to as evolved node B (eNodeB) or eNB. At this time, the EUTRAN includes one or more eNodeBs (eNBs). The base station 20 of NR may be referred to as gNodeB or gNB. At this time, the NGRAN includes one or more gNBs. The base station 20 of 6G may be referred to as 6GNodeB, 6gNodeB, 6GNB, or 6gNB. At this time, the 6GRAN includes one or more 6GNBs. The EUTRAN may include the gNB (en-gNB) connected to the core network (EPC) in the LTE communication system (EPS). The NGRAN may include the ng-eNB connected to the core network 5GC in a 5G communication system (5GS).

In a case where the base station 20 is the eNB, the gNB, the 6GNB, or the like, the base station 20 may be referred to as a 3GPP access. In a case where the base station 20 is the radio access point, the base station 20 may be referred to as a non-3GPP access. The base station 20 may be an optical extension device called a remote radio head (RRH). In a case where the base station 20 is the gNB, the base station 20 may be a combination of the gNB-CU and the gNB-DU described above, or may be either the gNB-CU or the gNB-DU.

Here, the gNB-CU hosts a plurality of upper layers (for example, radio resource control (RRC), service data adaptation protocol (SDAP), and packet data convergence protocol (PDCP)) in an access stratum for communication with the UE. On the other hand, the gNB-DU hosts a plurality of lower layers (for example, radio link control (RLC), medium access control (MAC), and physical layer (PHY)) in an access stratum. In other words, among messages/information to be described later, RRC signaling (semi-static notification) may be generated by the gNB-CU, while MAC CE and DCI (dynamic notification) may be generated by the gNB-DU. Alternatively, in the RRC configuration (semi-static notification), for example, some configurations such as IE: cellGroupConfig may be generated by the gNB-DU, and the remaining configurations may be generated by the gNB-CU. These configurations may be transmitted and received through an F1 interface.

The base station 20 may be configured to be able to communicate with other base stations 20. In a case where the plurality of base stations 20 is the eNBs or a combination of the eNB and the en-gNB, these base stations 20 may be connected by an X2 interface. In a case where the plurality of base stations 20 is the gNBs or a combination of the gn-eNB and the gNB, these base stations 20 may be connected by an Xn interface. In a case where the plurality of base stations 20 is a combination of the gNB-CU and the gNB-DU, these base stations 20 may be connected by the F1 interface. A message/information (for example, RRC signaling, MAC control element (MAC CE), or downlink control information (DCI)) described later may be transmitted between the plurality of base stations 20 via, for example, the X2 interface, the Xn interface, or the F1 interface.

The cell provided by the base station 20 may be referred to as a serving cell. The concept of the serving cell includes a primary cell (PCell) and a secondary cell (SCell). In a case where dual connectivity is provided to the terminal device 40, the PCell provided by a master node (MN) and zero or one or more SCells may be referred to as a master cell group. Examples of the dual connectivity include EUTRA-EUTRA dual connectivity, EUTRA-NR dual connectivity (ENDC), EUTRA-NR dual connectivity with 5GC, NR-EUTRA dual connectivity (NEDC), and NR-NR dual connectivity. Further, examples of the dual connectivity include NR-6G dual connectivity and 6G-NR dual connectivity.

The serving cell may include a primary secondary cell (PSCell) or a primary SCG cell. In a case where the dual connectivity is provided to the terminal device 40, the PSCell provided by a secondary node (SN) and zero or one or more SCells may be referred to as a secondary cell group (SCG). Unless specifically configured (for example, PUCCH on SCell), a physical uplink control channel (PUCCH) is transmitted by the PCell and the PSCell but not by the SCell. A radio link failure is detected by the PCell and the PSCell, but is not detected by the SCell (no need to detect). As described above, since the PCell and the PSCell play a special role in the serving cell, they are also referred to as a special cell (SpCell).

In one cell, one downlink component carrier and one uplink component carrier may be associated. A system bandwidth corresponding to one cell may be divided into a plurality of bandwidth parts (BWPs). At this time, one or more BWPs may be set in the terminal device 40, and one BWP may be used as an active BWP for the terminal device 40. A radio resource that can be used by the terminal device 40, for example, a frequency band, a numerology (subcarrier spacing), or a slot format (slot configuration), may be different for each cell, each component carrier, or each BWP.

<2-2. Configuration of transmission/reception device>

The transmission/reception device 30 is a wireless communication apparatus serving as a relay of the base station 20. The transmission/reception device 30 is one type of base station. The transmission/reception device 30 is one type of information processor. The transmission/reception device 30 can be rephrased as a relay base station. Note that the transmission/reception device 30 may be a device called a repeater (for example, RF repeater, smart repeater, intelligent surface). The transmission/reception device 30 is a wireless communication apparatus that performs wireless communication with another wireless communication apparatus (for example, the base station 20, another transmission/reception device 30, or the terminal device 40).

The transmission/reception device 30 may be able to perform the NOMA communication with the terminal device 40. The transmission/reception device 30 relays communication between the base station 20 and the terminal device 40. The transmission/reception device 30 may be able to perform wireless communication with another transmission/reception device 30 and the base station 20. The transmission/reception device 30 may be a ground station device or a non-ground station device. The transmission/reception device 30 configures a radio access network RAN together with the base station 20.

The transmission/reception device 30 may be a fixed device, a movable device, or a floating device. The size of the coverage of the transmission/reception device 30 is not limited to a specific size. The cell covered by the transmission/reception device 30 may be a macro cell, a micro cell, or a small cell.

The transmission/reception device 30 is not limited to a mounted device as long as the relay function is satisfied. The transmission/reception device 30 may be mounted on a terminal device such as a smartphone, may be mounted on an automobile, a train, a human-powered vehicle, or the like, may be mounted on a balloon, an airplane, a drone, or the like, or may be mounted on a home appliance such as a television, a game machine, an air conditioner, a refrigerator, or a lighting fixture.

The configuration of the transmission/reception device 30 may be similar to the configuration of the base station 20 described above. Similarly to the base station 20 described above, the transmission/reception device 30 may be a device installed in a mobile body or may be the mobile body itself. As described above, the mobile body may be a mobile terminal such as a smartphone or a mobile phone. The mobile body may be a mobile body that moves on land (on the ground in a narrow sense) or may be a mobile body that moves underground. The mobile body may be a mobile body that moves on water or may be a mobile body that moves under water. The mobile body may be a mobile body that moves in the atmosphere or may be a mobile body that moves outside the atmosphere. The transmission/reception device 30 may be a ground station device or a non-ground station device. The transmission/reception device 30 may be an aircraft station, a satellite station, or the like.

Similarly to the base station 20, the size of the coverage of the transmission/reception device 30 may be large such as the macro cell or small such as the picocell. The size of the coverage of the transmission/reception device 30 may be extremely small such as a femtocell. The transmission/reception device 30 may have the beamforming function. At this time, in the transmission/reception device 30, a cell or a service area may be formed for each beam. Further, the transmission/reception device 30 may have the pointforming function. At this time, in the transmission/reception device 30, a cell or a service area may be formed for each point.

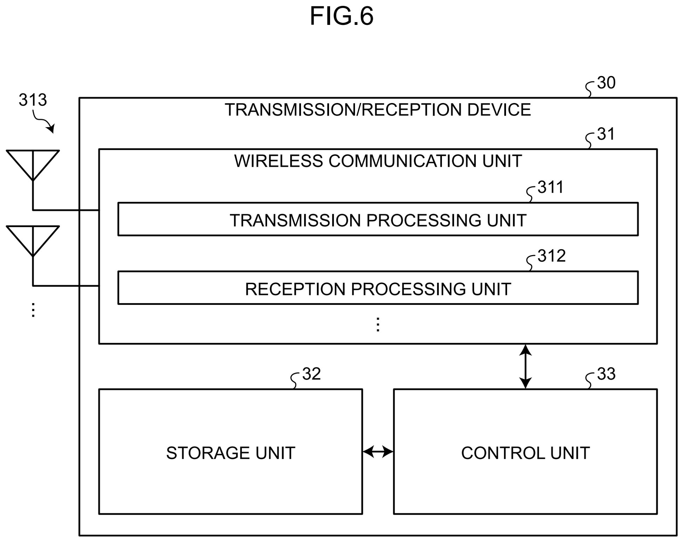

FIG. 6 is a diagram illustrating the configuration of the transmission/reception device 30 according to an embodiment of the present disclosure. The transmission/reception device 30 includes a wireless communication unit 31, a storage unit 32, and a control unit 33. Note that the configuration illustrated in FIG. 6 is the functional configuration, and the hardware configuration may be different from the functional configuration. Further, the functions of the transmission/reception device 30 may be implemented in a distributed manner in a plurality of physically separated structures.

The wireless communication unit 31 is a signal processing unit for wirelessly communicating with another wireless communication apparatus (for example, the base station 20, the terminal device 40, or another transmission/reception device 30). The wireless communication unit 31 corresponds to one or more radio access systems. The wireless communication unit 31 may correspond to at least one of NR, LTE, and 6G. The wireless communication unit 31 may support W-CDMA, cdma 3000, and the like in addition to NR, LTE, and 6G.

The wireless communication unit 31 includes a transmission processing unit 311, a reception processing unit 312, and an antenna 313. The wireless communication unit 31 may include a plurality of transmission processing units 311, a plurality of reception processing units 312, and a plurality of antennas 313. In a case where the wireless communication unit 31 supports a plurality of radio access systems, each part of the wireless communication unit 31 can be configured individually for each of the radio access systems. The transmission processing unit 311 and the reception processing unit 312 may be individually configured for LTE, NR, and 6G. The transmission processing unit 311 and the reception processing unit 312 may be individually configured for a cellular communication system and another communication system (for example, Wi-Fi or Bluetooth). The configurations of the transmission processing unit 311, the reception processing unit 312, and the antenna 313 may be similar to the configurations of the transmission processing unit 211, the reception processing unit 212, and the antenna 213 of the base station 20 described above. The wireless communication unit 31 may have the beamforming function similarly to the wireless communication unit 21 of the base station 20. The wireless communication unit 31 may have the pointforming function similarly to the wireless communication unit 21 of the base station 20.

The storage unit 32 is a storage device capable of reading and writing data, such as a DRAM, an SRAM, a flash memory, or a hard disk.

The control unit 33 is a controller that controls each unit of the transmission/reception device 30. The control unit 33 may be implemented by a processor such as a CPU or an MPU. Specifically, the control unit 33 may be implemented by a processor executing various programs stored in a storage device inside the transmission/reception device 30 using a RAM or the like as a work area. The control unit 33 may be implemented by an integrated circuit such as an ASIC or an FPGA. The CPU, the MPU, the ASIC, and the FPGA can all be regarded as controllers. Further, the control unit 33 may be implemented by a GPU. Any of the CPU, the MPU, the ASIC, the FPGA, and the GPU can be regarded as the controller. Note that the control unit 33 may include a plurality of physically separated objects. For example, the control unit 33 may include a plurality of semiconductor chips. The configuration and function of the control unit 33 may be similar to the configuration and function of the control unit 23 of the base station 20 described above.

The transmission/reception device 30 may be an IAB relay node. The transmission/reception device 30 operates as an IAB-mobile termination (MT) for an IAB donor node that provides the backhaul, and operates as an IAB-distributed unit (DU) for the terminal device 40 that provides an access. The IAB donor node may be, for example, the base station 20, and operates as an IAB-central unit (CU).

<2-3. Configuration of terminal device>

The terminal device 40 is a wireless communication apparatus that performs wireless communication with another wireless communication apparatus (for example, the base station 20, the transmission/reception device 30, or another terminal device 40). As the terminal device 40, any form of information processor (computer) can be employed. For example, the terminal device 40 may be a mobile terminal such as a mobile phone, a smart device (smartphone or tablet), a personal digital assistant (PDA), or a notebook PC. Further, the terminal device 40 may be an imaging device (for example, camcorder) having a communication function. Further, the terminal device 40 may be a motorcycle, a mobile relay car, or the like on which a communication device such as a field pickup unit (FPU) is mounted. Further, the terminal device 40 may be a machine to machine (M2M) device or an Internet of things (IoT) device. Still more, the terminal device 40 may be a wearable device such as a smart watch.

Still more, the terminal device 40 may be an xR device such as an augmented reality (AR) device, a virtual reality (VR) device, or a mixed reality (MR) device. At this time, the xR device may be an eyewear device such as AR glasses and MR glasses, or may be a head-mounted device such as a VR head-mounted display. In a case where the terminal device 40 is the xR device, the terminal device 40 may be a standalone device including only a user wearing part (for example, eyewear part). Further, the terminal device 40 may be a terminal interlocking device including a user wearing part (for example, eyewear part) and a terminal part (for example, smart device) interlocked with the user wearing part.

The terminal device 40 may be able to perform the NOMA communication with the base station 20 and/or the transmission/reception device 30. The terminal device 40 may be capable of using an automatic retransmission technology such as HARQ when communicating with the base station 20 and/or the transmission/reception device 30. The terminal device 40 may be able to perform sidelink communication with another terminal device 40. The terminal device 40 may be capable of using the automatic retransmission technology such as HARQ when performing the sidelink communication. The terminal device 40 may be able to perform the NOMA communication when performing the sidelink communication with another terminal device 40. The terminal device 40 may be able to perform LPWA communication with other wireless communication apparatuses such as the base station 20. The wireless communication used by the terminal device 40 may be wireless communication using millimeter waves. The wireless communication used by the terminal device 40 may be wireless communication using radio waves including the sidelink communication, or may be wireless communication using infrared rays or visible light, i.e., optical wireless communication.

The terminal device 40 may be a movable wireless communication apparatus, i.e., a mobile device. The terminal device 40 may also be a wireless communication apparatus installed in a mobile body or may be the mobile body itself. The terminal device 40 may also be a vehicle that moves on a road, such as an automobile, a bus, a truck, and a motorcycle, or a wireless communication apparatus mounted on the vehicle. The mobile body may be a mobile terminal, or may be a mobile body that moves on land (on the ground in a narrow sense), underground, on water, or underwater. Further, the mobile body may be a mobile body that moves in the atmosphere, such as an aircraft, an airship, a balloon, or a helicopter, or may be a mobile body that moves outside the atmosphere, such as an artificial satellite. The mobile body may be an unmanned aerial vehicle (UAV) such as a drone. Further, the terminal device 40 may be a wireless communication apparatus mounted on a mobile body.

The terminal device 40 may be able to communicate by being connected to a plurality of base stations 20 or a plurality of cells at the same time. In a case where one base station 20 supports a communication area via a plurality of cells (for example, pCell or sCell), the plurality of cells can be bundled to communicate between the base station 20 and the terminal device 40 using a carrier aggregation (CA) technology, a dual connectivity (DC) technology, a multi-connectivity (MC) technology, or the like. Alternatively, the terminal device 40 and the plurality of base stations 20 may communicate with each other using a coordinated multi-point transmission and reception (CoMP) technology through cells of different base stations 20.

The terminal device 40 may be capable of sidelink communication. Further, the terminal device 40 may be a relay terminal that relays communication to another communication apparatus. For example, the terminal device 40 may be a relay terminal that relays communication to a remote terminal.

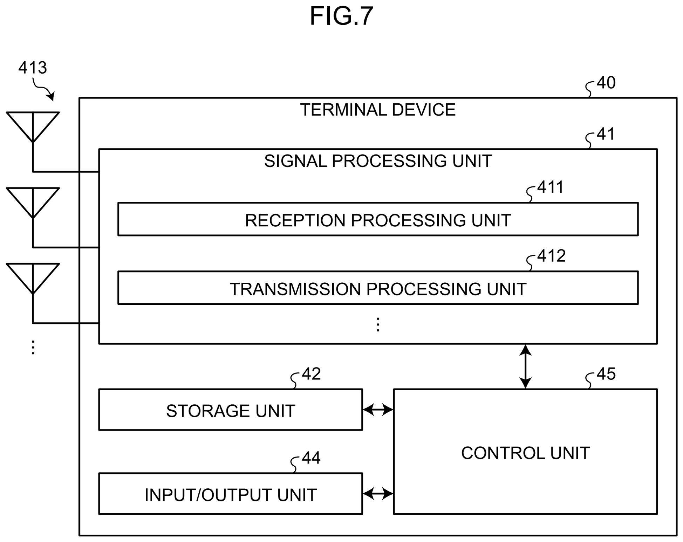

FIG. 7 is a diagram illustrating the configuration of the terminal device 40 according to an embodiment of the present disclosure. The terminal device 40 includes a wireless communication unit 41, a storage unit 42, and a control unit 33. Note that the configuration illustrated in FIG. 7 is a functional configuration, and a hardware configuration may be different therefrom. Further, the functions of the terminal device 40 may be implemented in a distributed manner in a plurality of physically separated configurations.

The wireless communication unit 41 is a signal processing unit for wirelessly communicating with another wireless communication apparatus (for example, the base station 20, the transmission/reception device 30, or another terminal device 40). The wireless communication unit 41 is controlled by the control unit 43. The wireless communication unit 41 corresponds to one or more radio access systems. The wireless communication unit 41 may correspond to at least one of NR, LTE, and 6G. The wireless communication unit 41 may support W-CDMA, cdma 2000, and the like in addition to NR, LTE, and 6G. The wireless communication unit 41 may also support an automatic retransmission technology such as a hybrid automatic repeat request (HARQ).

The wireless communication unit 41 includes a transmission processing unit 411, a reception processing unit 412, and an antenna 413. The wireless communication unit 41 may include a plurality of transmission processing units 411, a plurality of reception processing units 412, and a plurality of antennas 413. In a case where the wireless communication unit 41 supports a plurality of radio access systems, each part of the wireless communication unit 41 can be configured individually for each of the radio access systems. The transmission processing unit 411 and the reception processing unit 412 may be individually configured for LTE, NR, and 6G. The transmission processing unit 411 and the reception processing unit 412 may be individually configured for a cellular communication system and another communication system (for example, Wi-Fi or Bluetooth). The antenna 413 may include a plurality of antenna elements, for example, a plurality of patch antennas.

The wireless communication unit 41 may have the beamforming function. For example, the wireless communication unit 41 may have a polarization beamforming function (or a polarization beamforming function using dual-polarized waves in polarization directions at 45 degrees and -45 degrees from the vertical direction) using vertically polarized waves (V-polarized waves) and horizontally polarized waves (H-polarized waves). Further, the wireless communication unit 41 may have the pointforming function. In addition, the configurations of the transmission processing unit 411, the reception processing unit 412, and the antenna 413 may be similar to the configurations of the transmission processing unit 211, the reception processing unit 212, and the antenna 213 of the base station 20 described above.

The storage unit 42 is a storage device capable of reading and writing data, such as a DRAM, an SRAM, a flash memory, or a hard disk.

The control unit 43 is a controller that controls each unit of the terminal device 40. The control unit 43 controls the wireless communication unit 41 to perform wireless communication with another wireless communication apparatus (for example, the base station 20, the transmission/reception device 30, or another terminal device 40). The control unit 43 may be implemented by a processor such as a CPU or an MPU. Specifically, the control unit 43 may be implemented by a processor executing various programs stored in a storage device inside the terminal device 40 using a RAM or the like as a work area. The control unit 43 may be implemented by an integrated circuit such as an ASIC or an FPGA. The CPU, the MPU, the ASIC, and the FPGA can all be regarded as controllers. The control unit 43 may be implemented by a GPU. Any of the CPU, the MPU, the ASIC, the FPGA, and the GPU can be regarded as the controller. Note that the control unit 43 may include a plurality of physically separated objects. For example, the control unit 43 may include a plurality of semiconductor chips.

<<3. Operation of communication system>>

Here, an example of transmission power control performed in a communication system constituting a user-centric network will be described.

<3-1. Path loss compensation method>

In the present embodiment, any one of the following methods is applied for path loss compensation in calculation of transmission power control of the terminal device 40. Note that the following names are merely examples, and another name may be used.

- Best criterion
- Worst criterion
- Sum criterion (total criterion)
- Average criterion
- Random criterion
- Without TPC criterion
- Sum-cond. criterion

(Best criterion)

The best criterion is a system for performing transmission power control using a path loss of the transmission/-reception device 30 that has the minimum path loss with the terminal device 40 among one or more transmission/reception devices 30. In other words, the best criterion is a system for performing transmission power control using the path loss of the transmission/reception device 30 that has the best path loss with the terminal device 40 among one or more transmission/reception devices 30.

The terminal device 40 performs transmission power control using, for example, Formula (2).

$$P_{UE} = min\left\{P_{max}, P_0 + 10log_{10}(2^\mu \cdot N_{PRB}) + \min_{AP \in C_{UE}}(PL_{AP,UE}^{dB})\right\} \qquad \cdots (2)$$

(Worst criterion)

The worst criterion is a system for performing transmission power control using a path loss of the transmission/reception device 30 that has the maximum path loss with the terminal device 40 among one or more transmission/-reception devices 30. In other words, the worst criterion is a system for performing transmission power control using the path loss of the transmission/reception device 30 that has the worst path loss with the terminal device 40 among one or more transmission/reception devices 30.

The terminal device 40 performs transmission power control using, for example, Formula (3).

$$P_{UE} = min\left\{P_{max}, P_0 + 10log_{10}(2^\mu \cdot N_{PRB}) + \max_{AP \in C_{UE}}(PL_{AP,UE}^{dB})\right\} \qquad \cdots (3)$$

(Sum criterion)

The sum criterion is a system for performing transmission power control using the sum of path losses between all the transmission/reception devices 30 and the terminal device 40.

The terminal device 40 performs transmission power control using, for example, Formula (4).

$$P_{UE} = min\left\{P_{max}, P_0 + 10log_{10}(2^\mu \cdot N_{PRB}) - 10log_{10}\left(\sum_{AP \in C_{UE}} PL_{AP,UE}^{lin}\right)\right\}$$

$$\cdots (4)$$

(Average criterion)

The average criterion is a system for performing transmission power control using the average of path losses between all the transmission/reception devices 30 and the terminal device 40.

The terminal device 40 performs transmission power control using, for example, Formula (5).

$$P_{UE} = \min\left\{P_{max}, P_0 + 10log_{10}(2^{\mu} \cdot N_{PRB}) - 10log_{10}\left(\frac{\sum_{AP \in C_{UE}} PL_{AP,UE}^{lin}}{|C_{UE}|}\right)\right\}$$

$$\cdots (5)$$

(Random criterion)

The random criterion is a system in which a transmission/reception device 30 is randomly selected from among one or more transmission/reception devices 30 and transmission power control is performed using the path loss of the transmission/reception device 30 that has the maximum path loss between the selected transmission/reception device 30 and the terminal device 40. The selection of the transmission/reception device 30 may be made by the terminal device 40 or the base station 20.

The terminal device 40 performs transmission power control using, for example, Formula (6).

$$P_{UE} = \min\left\{P_{max}, P_0 + 10log_{10}(2^{\mu} \cdot N_{PRB}) + \mathop{rand}_{AP \in C_{UE}}\left(PL_{AP,UE}^{dB}\right)\right\} \qquad \cdots (6)$$

In Formulas (2) to (6) described above, $P_{max}$ represents the maximum transmission power of the terminal device 40, $P_0$ represents the target reception power, $N_{PRB}$ represents the number of resource blocks, AP represents the base station ID, and $C_{UE}$ represents the base station group to which the terminal device 40 is connected. In Formula (6), rand indicates that the base station 20 is randomly selected from the base station group to which the terminal device 40 is connected.

(Without TPC criterion)

The without TPC criterion is a system of power control in which the terminal device 40 always transmits a signal with the maximum transmission power $P_{max}$.

(Sum-cond. criterion)

The terminal device 40 can perform transmission power control using a method obtained by extending the criteria described above.

Here, in a case where attention is paid to the terminal device 40 having a high reception SINR and the terminal device 40 having a low reception SINR, the following features can be given.

In a case where transmission power control is not performed and transmission is always performed at the maximum transmission power of the terminal device 40 (without TPC criterion), there is a characteristic feature that the transmission/reception device 30 having the minimum path loss with the terminal device 40 having a high reception SINR receives small interference power from the other terminal devices 40.

On the other hand, in a case where transmission is always performed at the maximum transmission power of the terminal device 40 (without TPC criterion), there is a characteristic feature that the transmission/reception device 30 having the minimum path loss with the terminal device 40 having a low reception SINR receives large interference power from the other terminal devices 40.

In a case where transmission power control is performed based on the sum criterion, with respect to the terminal device 40 having a high reception SINR, the reception SINR at the transmission/reception device 30 decreases as compared with a case where the signal is always transmitted at the maximum transmission power described above.

In a case where transmission power control is performed based on the sum criterion, with respect to the terminal device 40 having a low reception SINR, the reception SINR at the transmission/reception device 30 improves as compared with a case where the signal is always transmitted at the maximum transmission power described above. However, some of the terminal devices 40, particularly, the terminal device 40 connected to the transmission/reception device 30 having the minimum path loss, and the terminal devices 40 to which the transmission/reception device 30 is redundantly connected are greatly affected by interference from the other terminal devices 40, and the amount of improvement in reception SINR is small.

Here, in the plurality of terminal devices 40, redundant connection of the transmission/reception device 30 means that each of the plurality of terminal devices 40 communicates with the same transmission/reception device 30. There may be a plurality of transmission/reception devices 30 redundantly connected to a plurality of terminal devices 40.

From the above considerations, for example, a system (sum-cond. criterion) may be employed in which the base control for transmission power control is set to the sum criterion, and for the terminal device 40 to which two or more transmission/reception devices 30 are redundantly connected, transmission power control different from the sum criterion is performed.

In the sum-cond. criterion transmission power control, the terminal device 40 performs transmission power control based on the sum criterion, excluding the transmission/reception device 30 redundantly shared with another terminal device 40. At this time, the terminal device 40 can acquire, from the base station 20, information regarding the transmission/reception device 30 to be excluded.

More specifically, for example, the transmission/reception device 30 having the minimum path loss with the terminal device 40 is defined as a minimum transmission/reception device 30mim, and the other transmission/reception devices 30 connected to the terminal device 40 are defined as connection transmission/reception devices 30A and 30B. In this case, the terminal device 40 uses the connection transmission/reception devices 30A and 30B to calculate the sum criterion used for path loss compensation.

As described above, by calculating the path loss compensation using the path loss with the transmission/reception device 30 other than the transmission/reception device 30 having the minimum path loss, the communication system can secure a sufficient SINR in the uplink communication.

Here, the terminal device 40 performs the transmission power control based on the sum criterion, excluding the transmission/reception device 30 having the minimum path loss, but the transmission power control performed by the terminal device 40 is not limited to the sum criterion. The terminal device 40 may perform transmission power control according to the other criteria described above, excluding the transmission/reception device 30 having the minimum path loss.

In addition, the transmission power control method may be different for each terminal device 40. For example, the transmission power control method may be different depending on the situation of the terminal device 40. For example, the terminal device 40_1 may perform transmission power control based on the Best criterion, and the terminal device 40_2 may perform transmission power control based on the sum criterion. The terminal device 40 can select a method to be implemented based on a notification from the base station 20. Alternatively, the terminal device 40 may select a method to be implemented depending on the situation of the terminal device itself.

Further, the terminal device 40 can acquire information used to perform calculation for transmission power control, for example, from the base station 20. For example, the terminal device 40 may acquire, from the base station 20, information such as which transmission/reception device 30 is to be used to perform transmission power control, or which method is to be used to perform transmission power control.

<3-2. Simulation>

Hereinafter, a result of simulation of path loss calculation in transmission power control using each of the methods (techniques) will be described.

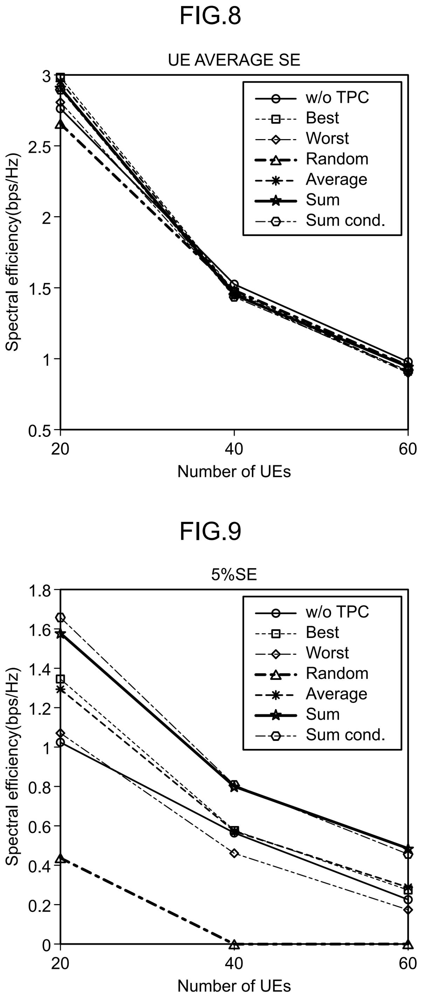

FIG. 8 is a diagram illustrating an example of a result of simulation of transmission power control according to an embodiment of the present disclosure. In FIG. 8, the horizontal axis represents the number of UEs (terminal devices 40), and the vertical axis represents frequency utilization efficiency (bps/Hz). FIG. 8 illustrates a relationship between the number of terminal devices 40 and the average frequency utilization efficiency of the terminal devices 40.

Here, comparative simulations are conducted to evaluate the impact of each technique on frequency utilization efficiency (spectrum efficiency: SE).

When comparing the average frequency utilization efficiency of the terminal devices 40, no significant difference is observed between the methods when the number of terminal devices 40 is 40 or 60. On the other hand, when the number of terminal devices 40 is 20, a difference is observed between the methods, and the best criterion achieves the highest frequency utilization efficiency.

FIG. 9 is a diagram illustrating another example of a result of simulation of transmission power control according to an embodiment of the present disclosure. In FIG. 9, the horizontal axis represents the number of UEs (terminal devices 40), and the vertical axis represents frequency utilization efficiency (bps/Hz). FIG. 9 illustrates a relationship between the number of terminal devices 40 and 5%-tile of the frequency utilization efficiency of the terminal devices 40.

When comparing the terminal device 5%-tile frequency utilization efficiency for each method, regardless of the number of terminal devices 40, the frequency utilization efficiency is maximized when transmission power control is performed based on the sum-cond. criterion or the sum criterion.

This can be because, in a user-centric network environment connected to the plurality of transmission/reception devices 30, using the sum criterion or the sum-cond. criterion can improve the communication quality of the terminal device 40 having a low reception SINR.

<3-3. Method of applying transmission power control method>

Among the transmission power control methods described above, a method to be applied may be determined in advance as static information, or may be determined based on semi-static control information. Alternatively, a method to be applied may be determined based on implicit information.

For example, the static information is information determined in advance in specifications or the like. For example, the semi-static control information is system information unique to a cell, RRC signaling uniquely notified to the terminal device 40, or the like.

For example, the implicit information is information correlated with the formation of a user-centric network. For example, there is a method of switching between the conventional transmission power control and the transmission power control of the present embodiment in correlation with the formation of a user-centric network. In a case where the transmission power control of the present embodiment is performed, a method to be applied may be determined based on static information or semi-static information.

For example, in a case where the terminal device 40 receives information regarding the formation of a user-centric network from the base station 20, the terminal device 40 executes the transmission power control according to the present embodiment. On the other hand, if the network is not a user-centric network, the terminal device 40 performs the conventional transmission power control. For example, in a case where the terminal device 40 receives a notification to release the formation of the user-centric network from the base station 20, the terminal device 40 switches from the transmission power control according to the present embodiment to the conventional transmission power control.

Here, the information regarding the formation of a user-centric network is, for example, information explicitly notified from the base station 20 to the terminal device 40. In such a case, the base station 20 notifies the terminal device 40 of information indicating that communication via the user-centric network is performed.

Alternatively, the information regarding the formation of a user-centric network may be implicitly notified to the terminal device 40. For example, the terminal device 40 determines that the information regarding a user-centric network formation has been received in a case where the terminal device 40 simultaneously communicates with a plurality of clustered transmission/reception devices 30. In other words, when simultaneously communicating with the plurality of clustered transmission/reception devices 30, the terminal device 40 executes the transmission power control according to the present embodiment. On the other hand, in a case where the formation of the user-centric network is released and communication is performed with one base station 20, the terminal device 40 executes the conventional transmission power control.

Further, as in the communication scenario 2 and the communication scenario 3 described above, in a case where the number of transmission/reception devices 30 to which the terminal device 40 connects is different between the downlink communication and the uplink communication, the following method can be applied to the transmission power control.

(Taking into consideration quality and/or propagation path characteristics of uplink communication)

For example, the terminal device 40 may control the transmission power based on the communication quality and/or the propagation path characteristics with the transmission/reception device 30 connected via uplink communication. In a case where a plurality of transmission/reception devices 30 is connected via uplink communication, the terminal device 40 can control the transmission power using any one of the transmission power control methods described above.

At this time, the terminal device 40 does not account for the communication quality and/or the propagation path characteristics with the transmission/reception device 30 connected via downlink communication. Further, the terminal device 40 may control the transmission power in consideration of some of the plurality of transmission/reception devices 30 connected via uplink communication.

(Taking into consideration quality and/or propagation path characteristics of downlink communication)

For example, the terminal device 40 may control the transmission power based on the communication quality and/or the propagation path characteristics with the transmission/reception device 30 connected via downlink communication. In a case where a plurality of transmission/reception devices 30 is connected via downlink communication, the terminal device 40 can control the transmission power using any one of the transmission power control methods described above.

At this time, the terminal device 40 does not account for the communication quality and/or the propagation path characteristics with the transmission/reception device 30 connected via uplink communication. Further, the terminal device 40 may control the transmission power in consideration of some of the plurality of transmission/reception devices 30 connected via downlink communication.

(Taking into consideration quality and/or propagation path characteristics of uplink/downlink communication)

For example, the terminal device 40 may control the transmission power based on any one of the communication quality and/or the propagation path characteristics with the transmission/reception device 30 connected via downlink communication, and the communication quality and/or the propagation path characteristics with the transmission/reception device 30 connected via uplink communication.

For example, the terminal device 40 compares the communication quality and/or the propagation path characteristics with the transmission/reception device 30 connected via downlink communication, and the communication quality and/or the propagation path characteristics with the transmission/reception device 30 connected via uplink communication. The terminal device 40 determines, based on the comparison result, the communication quality and/or the propagation path characteristics to be used in the transmission power control.

Here, in comparing the communication quality and/or the propagation path characteristics of the downlink with the communication quality and/or the propagation path characteristics of the uplink, an issue is to determine which transmission/reception device 30 should be used as the basis for calculating the communication quality and/or the propagation path characteristics.

(Using transmission power control method)

In light of the above, the terminal device 40 according to the present embodiment determines the transmission/reception device 30 to be used for calculation of the communication quality and/or the propagation path characteristics based on, for example, the transmission power control method. That is, the terminal device 40 calculates the communication quality and/or the propagation path characteristics for comparison using the same method as that used for the transmission power control.

(Best criterion, worst criterion, random criterion)

For example, in a case where the method used for transmission power control is a method (technique) such as the best criterion, the worst criterion, or the random criterion, the terminal device 40 calculates the communication quality and/or the propagation path characteristics based on the transmission/reception device 30 selected using each criterion.

For example, in a case where the method used for transmission power control is the best criterion, the terminal device 40 calculates the communication quality and/or the propagation path characteristics of uplink based on the transmission/reception device 30 having the minimum path loss in the uplink communication. The terminal device 40 calculates the communication quality and/or the propagation path characteristics of downlink based on the transmission/reception device 30 having the minimum path loss in the downlink communication.

For example, in a case where the method used for transmission power control is the worst criterion, the terminal device 40 calculates the communication quality and/or the propagation path characteristics of uplink based on the transmission/reception device 30 having the maximum path loss in the uplink communication. The terminal device 40 calculates the communication quality and/or the propagation path characteristics of downlink based on the transmission/reception device 30 having the maximum path loss in the downlink communication.

For example, in a case where the method used for transmission power control is the random criterion, the terminal device 40 calculates the communication quality and/or the propagation path characteristics of uplink based on the transmission/reception device 30 that is randomly selected. The terminal device 40 calculates the communication quality and/or the propagation path characteristics of downlink based on the transmission/reception device 30 that is randomly selected.

(Sum criterion, average criterion, sum-cond. criterion)

For example, in a case where the method used for transmission power control is a method (technique) such as the sum criterion, the average criterion, or the sum-cond. criterion, the terminal device 40 calculates the communication quality and/or the propagation path characteristics based on the calculation of each criterion.

For example, in a case where the method used for transmission power control is the sum criterion, the terminal device 40 calculates the communication quality and/or the propagation path characteristics of uplink based on the sum of path losses of the transmission/reception devices 30 that perform the uplink communication. The terminal device 40 calculates the communication quality and/or the propagation path characteristics of downlink based on the sum of path losses of the transmission/reception devices 30 that perform the downlink communication.

For example, in a case where the method used for transmission power control is the average criterion, the terminal device 40 calculates the communication quality and/or the propagation path characteristics of uplink based on the average of the path losses of the transmission/reception devices 30 that perform the uplink communication. The terminal device 40 calculates the communication quality and/or the propagation path characteristics of downlink based on the average of the path losses of the transmission/reception devices 30 that perform the downlink communication.

For example, in a case where the method used for transmission power control is the sum-cond. criterion, the terminal device 40 calculates the communication quality and/or the propagation path characteristics of uplink based on the sum of path losses of the transmission/reception devices 30 that are the subject of the calculation among the transmission/reception devices 30 that perform the uplink communication. The terminal device 40 calculates the communication quality and/or the propagation path characteristics of downlink based on the sum of path losses of the transmission/reception devices 30 that are the subject of the calculation among the transmission/reception devices 30 that perform the downlink communication.

(Using predetermined calculation method)

Alternatively, the terminal device 40 according to the present embodiment may determine the transmission/reception device 30 to be used for calculation of the communication quality and/or the propagation path characteristics based on, for example, a predetermined method.

In such a case, the terminal device 40 calculates the communication quality and/or the propagation path characteristics of downlink and the communication quality and/or the propagation path characteristics of uplink based on a predetermined calculation means (calculation method), regardless of the transmission power control methods (techniques).

That is, the method of calculating the communication quality and/or the propagation path characteristics performed in the transmission power control is different from the method of calculating the communication quality and/or the propagation path characteristics performed for comparison. An example of the calculation method (calculation method) is shown below.

For example, the terminal device 40 calculates the communication quality and/or the propagation path characteristics of uplink based on the transmission/reception device 30 having the minimum path loss in the uplink communication. The terminal device 40 calculates the communication quality and/or the propagation path characteristics of downlink based on the transmission/reception device 30 having the minimum path loss in the downlink communication.

For example, the terminal device 40 calculates the communication quality and/or the propagation path characteristics of uplink based on the transmission/reception device 30 having the maximum path loss in the uplink communication. The terminal device 40 calculates the communication quality and/or the propagation path characteristics of downlink based on the transmission/reception device 30 having the maximum path loss in the downlink communication.

For example, the terminal device 40 calculates the communication quality and/or the propagation path characteristics of uplink based on the transmission/reception device 30 that is randomly selected. The terminal device 40 calculates the communication quality and/or the propagation path characteristics of downlink based on the transmission/reception device 30 that is randomly selected.

For example, the terminal device 40 calculates the communication quality and/or the propagation path characteristics of uplink based on the sum of path losses of the transmission/reception devices 30 that perform the uplink communication. The terminal device 40 calculates the communication quality and/or the propagation path characteristics of downlink based on the sum of path losses of the transmission/reception devices 30 that perform the downlink communication.

For example, the terminal device 40 calculates the communication quality and/or the propagation path characteristics of uplink based on the average of the path losses of the transmission/reception devices 30 that perform the uplink communication. The terminal device 40 calculates the communication quality and/or the propagation path characteristics of downlink based on the average of the path losses of the transmission/reception devices 30 that perform the downlink communication.

For example, the terminal device 40 calculates the communication quality and/or the propagation path characteristics of uplink based on the sum of path losses of the transmission/reception devices 30 that are the subject of the calculation among the transmission/reception devices 30 that perform the uplink communication. The terminal device 40 calculates the communication quality and/or the propagation path characteristics of downlink based on the sum of path losses of the transmission/reception devices 30 that are the subject of the calculation among the transmission/reception devices 30 that perform the downlink communication.

(Comparison method)

The terminal device 40 calculates the communication quality and/or the propagation path characteristics of uplink and the communication quality and/or the propagation path characteristics of downlink using the method (scheme) described above. The terminal device 40 compares the calculated communication quality and/or propagation path characteristics, and determines the communication quality and/or the propagation path characteristics to be used for transmission power control. An example of the comparison method is given below.

For example, the terminal device 40 controls the transmission power based on the worse one of the communication quality and/or the propagation path characteristic of downlink and the communication quality and/or the propagation path characteristics of uplink.

For example, the terminal device 40 controls the transmission power based on the better one of the communication quality and/or the propagation path characteristics of downlink and the communication quality and/or the propagation path characteristics of uplink.

Here, as an example, good propagation path characteristics may be interpreted as a small path loss between the transmission/reception device 30 and the terminal device 40. In addition, poor propagation path characteristics may be interpreted as a large path loss between the transmission/reception device 30 and the terminal device 40. The terminal device 40 can compare the propagation path characteristics by using the propagation path characteristics included in the example of the propagation path characteristics described above other than the path loss.

<3-4. Determination of transmission/reception device>

When the terminal device 40 performs transmission power control, information is required regarding which transmission/reception device 30 the terminal device 40 is to communicate with. Here, an example of a means for determining which transmission/reception device 30 the terminal device 40 is to communicate with will be described.

(Means using location information)

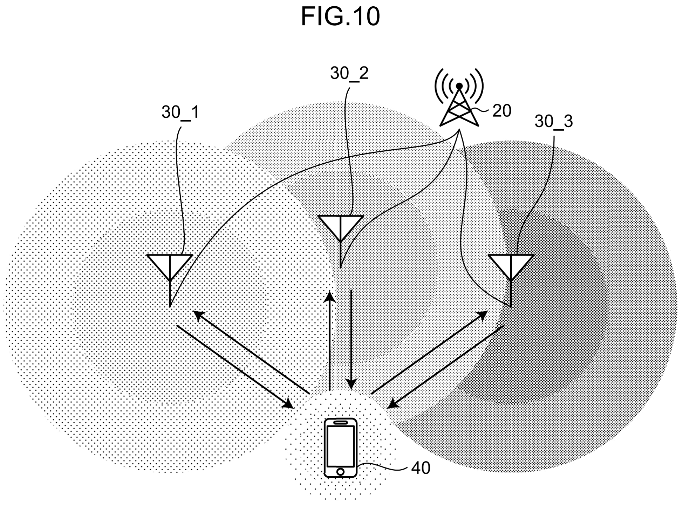

FIG. 10 is a diagram illustrating an example of a means for determining a transmission/reception device 30 that is a communication partner according to an embodiment of the present disclosure. The base station 20 forms, in advance, a communication area using a plurality of transmission/reception devices 30. Note that the communication areas of each of the transmission/reception devices 30 may overlap.

The terminal device 40 attaches to any one of the plurality of transmission/reception devices 30. After (or during) attachment, the terminal device 40 notifies the base station 20 and the transmission/reception device 30 to which the terminal device 40 has attached (or is currently attached) of the location information of the terminal device 40 itself. The base station 20 determines the transmission/reception device 30 to be connected to the terminal device 40 based on the location information of the terminal device 40. Note that, instead of the terminal device 40 notifying the location information, the base station 20 may perform a procedure to measure the location of the terminal device 40.

As described above, in the present embodiment, the plurality of transmission/reception devices 30 forms a communication area. The terminal device 40 receives a synchronization signal transmitted by any one of the transmission/reception devices 30. The terminal device 40 transmits an initial access Message 1 using a resource corresponding to the received synchronization signal.

The terminal device 40 may transmit the initial access Message 1 to the transmission/reception device 30 corresponding to the synchronization signal received earliest. Alternatively, when receiving a plurality of synchronization signals, the terminal device 40 may transmit the initial access Message 1 to the transmission/reception device 30 corresponding to the synchronization signal having the best communication quality and/or propagation path characteristics.

The terminal device 40 notifies the attached transmission/reception device 30 of the location information of the terminal device 40 during or after the initial access. Alternatively, the transmission/reception device 30 (or the base station 20) may perform a procedure to measure the location information of the terminal device 40 during or after the initial access.

Here, the location information of the terminal device 40 can be acquired by the terminal device 40 based on, for example, information from a location measuring device possessed by the terminal device 40 or the like. The terminal device 40 may notify the attached transmission/reception device 30 of the acquired location information.

Alternatively, the location information of the terminal device 40 may be acquired by, for example, a location measurement procedure by the base station 20. At this time, the base station 20 and/or the attached transmission/reception device 30 may transmit a reference signal (for example, positioning reference signal) for location measurement to the terminal device 40. The terminal device 40 feeds back the measurement result of the reference signal to the attached transmission/reception device 30 and/or the base station 20.

As another means, the terminal device 40 may transmit a reference signal (for example, sounding reference signal: SRS) for uplink channel state estimation. The attached transmission/reception device 30 and/or the base station 20 may estimate the location of the terminal device 40 using the reference signal for uplink channel state estimation.

The base station 20 determines the transmission/reception device 30 to which the terminal device 40 is to connect based on the received location information or reference signal of the terminal device 40.

Information used for communication with the plurality of transmission/reception devices 30 determined may be notified from the base station 20 and/or the attached transmission/reception device 30 to the terminal device 40.

When the base station 20 determines the plurality of transmission/reception devices 30 to which the terminal device 40 is to connect based on the location information, the terminal device 40 communicates with the plurality of transmission/reception devices 30.

As described above, the terminal device 40 initially accesses any one of the connectable transmission/reception devices 30. After completion of the initial access, the terminal device 40 becomes connected to the base station 20 and the transmission/reception device 30. Thereafter, the base station 20 controls which transmission/reception device 30 the terminal device 40 is to connect to. The base station 20 has roles of controlling the transmission/reception devices 30 and managing the mobility of the terminal device 40.

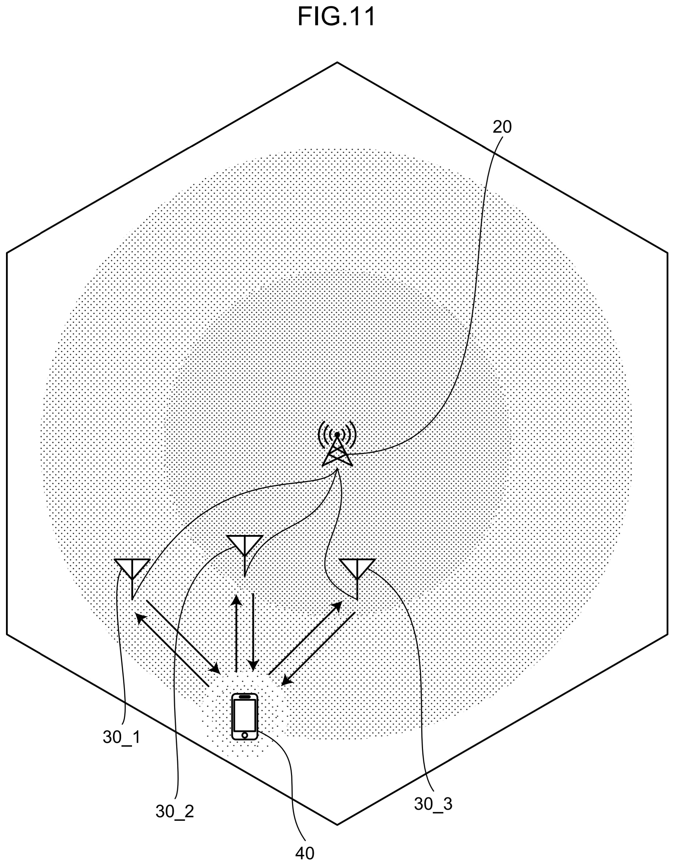

FIG. 11 is a diagram illustrating another example of a means for determining a transmission/reception device 30 that is a communication partner according to an embodiment of the present disclosure. The base station 20 forms, in advance, one or more communication areas covering all the communication areas of the plurality of transmission/reception devices 30.

The terminal device 40 attaches to the base station 20. After (or during) attachment, the terminal device 40 notifies the base station 20 to which the terminal device 40 has attached (or is currently attached) of the location information of the terminal device 40 itself. The base station 20 determines the transmission/reception device 30 to be connected to the terminal device 40 based on the location information of the terminal device 40. Note that, instead of the terminal device 40 notifying the location information, the base station 20 may perform a procedure to measure the location of the terminal device 40.

This method is different from the method illustrated in FIG. 10 in that the terminal device 40 attaches to the base station 20.

As described above, in the present embodiment, the base station 20 forms a communication area. The terminal device 40 receives a synchronization signal transmitted by the base station 20. The terminal device 40 transmits an initial access Message 1 using a resource corresponding to the received synchronization signal.

The terminal device 40 notifies the base station 20 of the location information of the terminal device 40 during or after the initial access. Alternatively, the base station 20 may perform a procedure to measure the location information of the terminal device 40 during or after the initial access.

Here, the location information of the terminal device 40 can be acquired by the terminal device 40 based on, for example, information from a location measuring device possessed by the terminal device 40 or the like. The terminal device 40 may notify the base station 20 of the acquired location information.

Alternatively, the location information of the terminal device 40 may be acquired by, for example, a location measurement procedure by the base station 20. At this time, the base station 20 may transmit a reference signal (for example, positioning reference signal) for location measurement to the terminal device 40. The terminal device 40 feeds back the measurement result of the reference signal to the base station 20.

As another means, the terminal device 40 may transmit a reference signal (for example, sounding reference signal: SRS) for uplink channel state estimation. The base station 20 may estimate the location of the terminal device 40 using the reference signal for uplink channel state estimation.

The base station 20 determines the transmission/reception device 30 to which the terminal device 40 is to connect based on the received location information or reference signal of the terminal device 40.

Information used for communication with the plurality of transmission/reception devices 30 determined may be notified from the base station 20 to the terminal device 40.

When the base station 20 determines the plurality of transmission/reception devices 30 to which the terminal device 40 is to connect based on the location information, the terminal device 40 communicates with the plurality of transmission/reception devices 30.

As described above, the terminal device 40 initially accesses the base station 20. After completion of the initial access, the terminal device 40 becomes connected to the base station 20. Thereafter, the base station 20 controls which transmission/reception device 30 the terminal device 40 is to connect to. The base station 20 has roles of controlling the transmission/reception devices 30 and managing the mobility of the terminal device 40.

(Means using communication quality and/or propagation path characteristics)

The base station 20 forms, in advance, a communication area using a plurality of transmission/reception devices 30. Note that the communication areas of each of the transmission/reception devices 30 may overlap.

The terminal device 40 attaches to any one of the plurality of transmission/reception devices 30. After (or during) attachment, the terminal device 40 notifies the base station 20 and the transmission/reception device 30 to which the terminal device 40 has attached (or is currently attached) of the communication quality and/or the propagation path characteristics.

The base station 20 determines the transmission/reception device 30 to be connected to the terminal device 40 based on the communication quality and/or the propagation path characteristics. Note that, instead of the terminal device 40 notifying the communication quality and/or the propagation path characteristics, the base station 20 may perform a procedure to measure the communication quality and/or the propagation path characteristics.

As described above, in the present embodiment, the plurality of transmission/reception devices 30 forms a communication area. The terminal device 40 receives a synchronization signal transmitted by any one of the transmission/reception devices 30. The terminal device 40 transmits an initial access Message 1 using a resource corresponding to the received synchronization signal.

The terminal device 40 may transmit the initial access Message 1 to the transmission/reception device 30 corresponding to the synchronization signal received earliest. Alternatively, when receiving a plurality of synchronization signals, the terminal device 40 may transmit the initial access Message 1 to the transmission/reception device 30 corresponding to the synchronization signal having the best communication quality and/or propagation path characteristics.

The terminal device 40 notifies the attached transmission/reception device 30 of the communication quality and/or the propagation path characteristics between the plurality of transmission/reception devices 30 and the terminal device 40 during or after the initial access. Alternatively, the plurality of transmission/reception devices 30 may perform a procedure to measure the communication quality and/or the propagation path characteristics with the terminal device 40 during or after the initial access.

Here, the communication quality and/or the propagation path characteristics information between the plurality of transmission/reception devices 30 and the terminal device 40 can be measured from, for example, synchronization signals that can be received by the terminal device 40 and transmitted from the plurality of transmission/reception devices 30. Alternatively, the terminal device 40 may measure the communication quality and/or the propagation path characteristics information between the plurality of transmission/reception devices 30 and the terminal device 40 based on a reference signal for downlink channel estimation (for example, CSI-RS) or the like.

Alternatively, the communication quality and/or the propagation path characteristics information between the plurality of transmission/reception devices 30 and the terminal device 40 may be measured based on, for example, a reference signal for uplink channel state estimation (for example, a sounding reference signal (SRS)) transmitted by the terminal device 40. The attached transmission/reception device 30, one or more other transmission/reception devices 30 capable of receiving the reference signal, and/or the base station 20 perform communication quality and/or propagation path characteristics measurement using the reference signal.

The base station 20 determines the transmission/reception device 30 to which the terminal device 40 is to connect based on the received communication quality and/or propagation path characteristics information.

Information used for communication with the plurality of transmission/reception devices 30 determined may be notified from the base station 20 and/or the attached transmission/reception device 30 to the terminal device 40.

When the base station 20 determines the plurality of transmission/reception devices 30 to which the terminal device 40 is to connect based on the communication quality and/or the propagation path characteristics, the terminal device 40 communicates with the plurality of transmission/reception devices 30.

Note that the synchronization signal transmitted from the base station 20 and/or the transmission/reception device 30 is, for example, any one of the following.

- Primary synchronization signal (PSS)
- Secondary synchronization signal (SSS)
- Tertiary synchronization signal (TSS)

Further, the system information transmitted from the base station 20 and/or the transmission/reception device 30 can be transmitted, for example, via any one of the following.

- Physical broadcast channel (PBCH)
- Physical downlink shared channel (PDSCH)

<3-5. Signaling>

<3-5-1. Example of information used for communication>

The following information is an example of information that can be used for communication (communication in a user-centric network) between the terminal device 40 and the plurality of transmission/reception devices 30 different from each other. The terminal device 40 and/or the plurality of transmission/reception devices 30 perform communication using one or more pieces of the following information.

(Example of information provided from base station 20 and/or each transmission/reception device 30 to terminal device 40)

- Information regarding the formation of a user-centric network
- Information regarding the calculation method (scheme) for transmission power control
- Information regarding the transmission/reception device 30 for which communication quality and/or propagation path characteristics are to be calculated in transmission power control
- Information regarding the transmission/reception device 30 to be excluded from the calculation of communication quality and/or propagation path characteristics in transmission power control
- Communication area ID provided by each transmission/reception device 30
- Information regarding initial access to each transmission/reception device 30
- PRACH transmission resource in initial access to each transmission/reception device 30
- PRACH transmission preamble sequence in initial access to each transmission/reception device 30
- Uplink/downlink carrier frequency of each transmission/reception device 30
- Bandwidth used in communication with each transmission/reception device 30
- Terminal-specific ID (C-RNTI) used in communication with each transmission/reception device 30
- Radio resource configuration used in communication with each transmission/reception device 30
- Timing advance information used in communication with each transmission/reception device 30

Note that the information regarding the formation of a user-centric network includes information indicating whether or not to form a user-centric network.

(Example of information provided from terminal device 40 to base station 20 and/or each transmission/reception device 30)

- Mobility-related Information of the terminal device 40
- Location information of the terminal device 40
- Interference power information received by the terminal device 40
- Capability information regarding the user-centric network
- Communication quality and/or propagation path characteristics information

The mobility-related information includes, for example, at least one of a movement direction of the terminal device 40, a movement speed of the terminal device 40, and planned movement information (including route information) of the terminal device 40.
The location information of the terminal device 40 includes at least one of absolute location information of the terminal device 40 and relative location information of the terminal device 40. Further, in a case where the location information includes the relative location information, the location information may include information regarding a communication partner serving as the reference for the relative location.
Examples of the reference for the relative location include a connection start location with the base station 20 or the transmission/reception device 30, a location of the base station 20 or the transmission/reception device 30, and a reference location provided from the base station 20 or the transmission/reception device 30.

<3-5-2. Method of notifying communication information>

The terminal device 40 may periodically or dynamically notify the base station 20 and/or each transmission/reception device 30 of the communication information.

(Measurement implementation period by terminal device 40)

The terminal device 40 can perform measurement of the communication quality and/or the propagation path characteristics of each transmission/reception device 30 in a periodic or an aperiodic manner. Alternatively, the terminal device 40 may perform the measurement on the condition that a predetermined event occurs (event trigger).

(Periodic)

The terminal device 40 performs the measurement of the communication quality and/or the propagation path characteristics with each transmission/reception device 30 at predetermined timing. The terminal device 40 may perform the measurement by combining a plurality of periods. Alternatively, the terminal device 40 may continue to perform the measurement at all times.

(Aperiodic or event trigger)

The terminal device 40 performs the measurement at timing when receiving a measurement implementation request from the base station 20 and/or each transmission/reception device 30.
Alternatively, the terminal device 40 measures a measurement implementation trigger notified in advance or determined in advance, and performs the measurement at timing when the trigger is applied. Examples of the trigger are shown below. The terminal device 40 performs the measurement when at least one of the following triggers is satisfied.

- Case where a predetermined time has arrived
- Case where the reception quality of the connected transmission/reception device 30 becomes equal to or less than a certain level
- Case where the movement speed of the terminal device 40 has increased
- Case where the terminal device 40 has started to move

(Measurement notification period by terminal device 40)

The terminal device 40 can notify the measurement result of the communication quality and/or the propagation path characteristics of each transmission/reception device 30 in a periodic or an aperiodic manner. Alternatively, the terminal device 40 may notify the measurement result on the condition that a predetermined event occurs (event trigger).

(Periodic)

The terminal device 40 transmits the measurement result to the base station 20 and/or each transmission/reception device 30 at predetermined timing.
(Aperiodic or event trigger)
The terminal device 40 transmits the measurement result at timing when a request to notify the measurement result is received from the base station 20 and/or each transmission/reception device 30.
Alternatively, the terminal device 40 measures a notification trigger of the measurement result notified in advance or determined in advance, and transmits the measurement result at timing when the trigger is applied. Examples of the trigger are shown below. The terminal device 40 transmits the measurement result when at least one of the following triggers is satisfied.

- Case where the communication quality and/or the propagation path characteristics (for example, RSRP) of each connected transmission/reception device 30 become equal to or greater than a threshold
- Case where the communication quality and/or the propagation path characteristics (for example, RSRP) of each connected transmission/reception device 30 become equal to or less than the threshold
- Case where the communication quality and/or the propagation path characteristics (for example, RSRP) of an adjacent base station 20 and/or another transmission/reception device 30 become equal to or greater than an offset compared to the communication quality and/or the propagation path characteristics (for example, RSRP) of the base station 20 and/or each connected transmission/reception device 30
- Case where the communication quality and/or the propagation path characteristics (for example, RSRP) of an adjacent base station 20 and/or each transmission/reception device 30 become better than the communication quality and/or the propagation path characteristics (for example, RSRP) of the base station 20 and/or each connected transmission/reception device 30
- Case where the communication quality and/or the propagation path characteristics (for example, RSRP) of the belonging base station 20 and/or each transmission/reception device 30 become worse than a first threshold, and the communication quality and/or the propagation path characteristics (for example, RSRP) of the adjacent base station 20 and/or each transmission/reception device 30 become better than a second threshold
- Case where the quality of the reference signal (for example, CSI-RS) resource becomes better than the threshold
- Case where the quality of the reference signal (for example, CSI-RS) resource becomes better, by equal to or greater than the offset, as compared to the reference signal to be compared

- Case where the movement speed of the terminal device 40 becomes the threshold or greater
- Case where the movement speed of the terminal device 40 becomes the threshold or less

<3-5-3. Method of notifying reference signal>

The terminal device 40 may periodically or dynamically transmit, to each of the transmission/reception devices 30, a reference signal (for example, SRS or the like) that each of the transmission/reception devices 30 to be connected uses in order to measure the communication quality and/or the propagation path characteristics.

(Transmission period of reference signal by terminal device 40)

The terminal device 40 may transmit a reference signal in a periodic or an aperiodic manner. Alternatively, the terminal device 40 may transmit a reference signal on the condition that a predetermined event occurs (event trigger).

(Periodic)

The terminal device 40 transmits a reference signal to each transmission/reception device 30 at predetermined timing.

(Aperiodic or event trigger)

The terminal device 40 transmits a reference signal at timing when receiving a request to transmit a reference signal from the base station 20 and/or each transmission/reception device 30.
Alternatively, the terminal device 40 measures a reference signal transmission trigger notified in advance or determined in advance, and transmits a reference signal at timing when the trigger is applied. Examples of the trigger are shown below. The terminal device 40 transmits a reference signal when at least one of the following triggers is satisfied.

- Case where the communication quality and/or the propagation path characteristics (for example, RSRP) of each connected transmission/reception device 30 become equal to or greater than a threshold
- Case where the communication quality and/or the propagation path characteristics (for example, RSRP) of each connected transmission/reception device 30 become equal to or less than the threshold
- Case where the communication quality and/or the propagation path characteristics (for example, RSRP) of an adjacent base station 20 and/or another transmission/reception device 30 become equal to or greater than an offset compared to the communication quality and/or the propagation path characteristics (for example, RSRP) of the base station 20 and/or each connected transmission/reception device 30
- Case where the communication quality and/or the propagation path characteristics (for example, RSRP) of an adjacent base station 20 and/or each transmission/reception device 30 become better than the communication quality and/or the propagation path characteristics (for example, RSRP) of the base station 20 and/or each connected transmission/reception device 30
- Case where the communication quality and/or the propagation path characteristics (for example, RSRP) of the belonging base station 20 and/or each transmission/reception device 30 become worse than a first threshold, and the communication quality and/or the propagation path characteristics (for example, RSRP) of the adjacent base station 20 and/or each transmission/reception device 30 become better than a second threshold
- Case where the quality of the reference signal (for example, CSI-RS) resource becomes better than the threshold
- Case where the quality of the reference signal (for example, CSI-RS) resource becomes better, by equal to or greater than the offset, as compared to the reference signal to be compared
- Case where the movement speed of the terminal device 40 becomes the threshold or greater
- Case where the movement speed of the terminal device 40 becomes the threshold or less

<3-6. Connection state of terminal device>

Once each transmission/reception device 30 to which the terminal device 40 is to connect is determined, the terminal device 40 may be in a state of being always connectable to each transmission/reception device 30 until specific conditions are satisfied.
The specific conditions include, for example, the following conditions.

- A validation timer for enabling communication with each transmission/reception device 30 has expired
- The terminal device 40 has moved to a communication area of a transmission/reception device 30 that cannot perform cooperative communication with each transmission/reception device 30

Information regarding these specific conditions may be notified from the base station 20 and/or each transmission/reception device 30 to the terminal device 40.

In a case where it is determined that the state in which the cooperative communication with each transmission/reception device 30 is available has transitioned to the unavailable state, the terminal device 40, and the base station 20 and/or the transmission/reception device 30 may perform the following operations.

The terminal device 40 performs initial access again, and attempts to connect to the base station 20 or the transmission/reception device 30.

The base station 20 and/or the transmission/reception device 30 fall back from cooperative communication by each transmission/reception device 30 to conventional communication with a single base station or a single transmission/reception device. Thereafter, the base station 20 and/or the transmission/reception device 30 reconnects to the terminal device 40.

In order to maintain the communication state with the terminal device 40, the base station 20 and/or the transmission/reception device 30 may periodically perform measurement or the like and update each transmission/reception device 30 to which the terminal device 40 is connected.

In a case where the update of each transmission/reception device 30 to which the terminal device 40 is connected is completed, the terminal device 40 may reset the validation timer to the initial state listed as the specific condition, and start the validation timer again.

In a case where the update of each transmission/reception device 30 to which the terminal device 40 is connected is completed, information regarding the communication area of the transmission/reception device 30 that cannot perform cooperative communication with each transmission/reception device 30, listed as the specific condition, may also be updated.

<<4. Procedural example>>

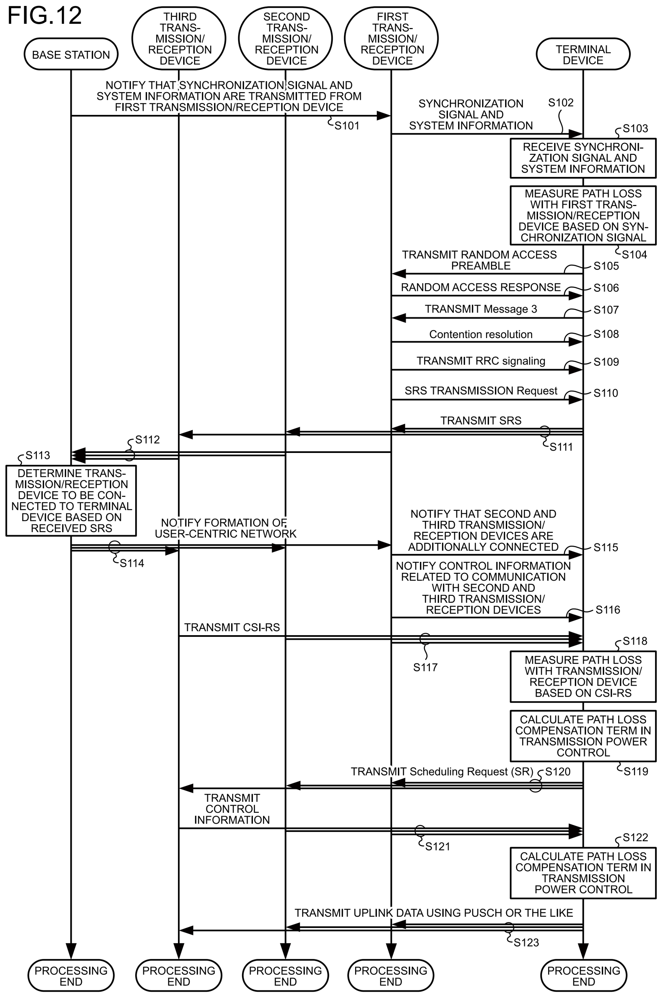

Hereinafter, a procedural example of transmission power control according to the present embodiment will be described. FIG. 12 is a sequence diagram illustrating an example of a flow of transmission power control according to an embodiment of the present disclosure.

Here, it is assumed that the first to third transmission/reception devices 30_1 to 30_3 form a user-centric network and communicate with the terminal device 40. It is also assumed that initial access is performed between the first transmission/reception device 30_1 and the terminal device 40.

The procedure of the transmission power control illustrated in FIG. 12 is an example, and the communication system may perform the transmission power control according to the present embodiment using another procedure.

As illustrated in FIG. 12, the base station 20 first notifies the first transmission/reception device 30_1 to transmit a synchronization signal and system information from the first transmission/reception device 30_1 (Step S101). Upon receiving this notification, the first transmission/reception device 30_1 transmits the synchronization signal and the system information (Step S102).

Although the case where the first transmission/reception device 30_1 transmits the synchronization signal and the system information is illustrated here, at least one of the second and third transmission/reception devices 30_2 and 30_3 may transmit the synchronization signal and the system information. In such a case, the base station 20 may instruct at least one of the second and third transmission/reception devices 30_2 and 30_3 to transmit the synchronization signal and the system information.

The terminal device 40 receives the synchronization signal and the system information transmitted by the first transmission/reception device 30_1 (Step S103). The terminal device 40 may measure the path loss between the terminal device 40 and the first transmission/reception device 30_1 based on the synchronization signal transmitted by the first transmission/reception device 30_1 (Step S104).

Note that the terminal device 40 may receive the synchronization signal and the system information from at least one of the second and third transmission/reception devices 30_2 and 30_3. In a case where the terminal device 40 receives the synchronization signal and the system information from the plurality of transmission/reception devices 30, the terminal device 40 may determine the transmission/reception device 30 that executes the initial access procedure according to, for example, the communication quality and/or the propagation path characteristics. Here, a case where the terminal device 40 executes the initial access procedure with the first transmission/reception device 30_1 will be described.

The terminal device 40 transmits a random access preamble to the first transmission/reception device 30_1 (Step S105), and starts the initial access.

When receiving the random access preamble from the terminal device 40, the first transmission/reception device 30_1 transmits a random access response to the terminal device 40 (Step S106).

The terminal device 40 transmits Message 3 information of the initial access to the first transmission/reception device 30_1 based on the information in the random access response (Step S107).

The first transmission/reception device 30_1 transmits contention resolution in order to avoid collision for a case where the plurality of terminal devices 40 transmits the same preamble (Step S108).

The first transmission/reception device 30_1 transmits RRC signaling to the terminal device 40 (Step S109). The RRC signaling may include control information (for example, information such as a transmission power control method) related to the transmission power control of the present embodiment.

The first transmission/reception device 30_1 may transmit, to the terminal device 40, a request (for example, SRS transmission request) to transmit a measurement reference signal (for example, SRS) for the uplink communication quality and/or the propagation path characteristics (Step S110).

The terminal device 40 that has received the request to transmit a measurement reference signal (for example, SRS) for the uplink communication quality and/or the propagation path characteristics transmits the measurement reference signal (for example, SRS) to the first transmission/reception device 30_1 (Step S111). At this time, as illustrated in FIG. 12, the second transmission/reception device 30_2 and the third transmission/reception device 30_3 that are present around the terminal device 40 may receive the SRS transmitted from the terminal device 40.

The first to third transmission/reception devices 30_1 to 30_3 transmit the received information on the SRS to the base station 20 (Step S112).

The base station 20 determines the transmission/reception device 30 to be connected to the terminal device 40 based on the received SRS (Step S113). Here, it is assumed that the base station 20 selects the first to third transmission/reception devices 30_1 to 30_3 as the transmission/reception device 30 to be connected to the terminal device 40.

The base station 20 notifies the first to third transmission/reception devices 30_1 to 30_3 of the formation of a user-centric network with the terminal device 40 (Step S114).

The first transmission/reception device 30_1 may notify the terminal device 40 that the second transmission/-reception device 30_2 and the third transmission/reception device 30_3 are to be additionally connected (Step S115).

The first transmission/reception device 30_1 may notify the terminal device 40 of control information necessary for communication with the second transmission/reception device 30_2 and the third transmission/reception device 30_3 and control information related to transmission power control (Step S116).

The first to third transmission/reception devices 30_1 to 30_3 may transmit, to the terminal device 40, a reference signal (for example, channel state information-reference signal (CSI-RS)) for measuring downlink propagation path quality (Step S117).

The terminal device 40 measures a path loss between the terminal device 40 and the transmission/reception device 30 based on the received reference signal (for example, CSI-RS) for measuring downlink propagation path quality (Step S118). More specifically, the terminal device 40 measures a path loss between each of the first to third transmission/reception devices 30_1 to 30_3 and the terminal device 40.

The terminal device 40 calculates a path loss compensation term in transmission power control from the measured path loss (Step S119).

The terminal device 40 may transmit a scheduling request (SR) to the first to third transmission/reception devices 30_1 to 30_3 (Step S120). Here, the terminal device 40 may perform transmission power control based on the path loss compensation term calculated in Step S119 to transmit the SR.

The first to third transmission/reception devices 30_1 to 30_3 transmit control information such as control information related to uplink transmission (for example, downlink control information (DCI)) (Step S121).

The terminal device 40 calculates a path loss compensation term in transmission power control from the path loss value measured in Step S118 (Step S122).

The terminal device 40 transmits uplink data (physical uplink scheduling channel (PUSCH)) to the first to third transmission/reception devices 30_1 to 30_3 (Step S123). Here, the terminal device 40 performs transmission power control based on the path loss compensation term calculated in Step S122 to transmit the uplink data.

As described above, the terminal device 40 according to the present embodiment includes the communication unit (for example, the wireless communication unit 41) and the control unit 43. The communication unit (for example, the wireless communication unit 41) communicates with the plurality of transmission/reception devices 30. The plurality of transmission/reception devices 30 form a user-centric network.

The communication unit (for example, the wireless communication unit 41) transmits and receives the same data to and from the plurality of transmission/reception devices 30 forming the user-centric network. Note that the communication unit (for example, the wireless communication unit 41) only needs to transmit and receive the same data to and from the plurality of transmission/reception devices 30, and transmission/reception signals (signal waveforms and the like) actually transmitted and received to and from the plurality of transmission/reception devices 30 may be different for each transmission/reception device 30. Alternatively, the communication unit (for example, the wireless communication unit 41) may simultaneously communicate with the plurality of transmission/reception devices 30 forming the user-centric network.

The control unit 43 measures communication quality and/or propagation path characteristics with one or more transmission/reception devices 30. The control unit 43 transmits data to one or more transmission/reception devices 30 at transmission power determined based on the communication quality and/or the propagation path characteristics. In this manner, the control unit 43 performs transmission power control using the communication quality and/or the propagation path characteristics with one or more transmission/reception devices 30.

This enables the terminal device 40 to perform transmission power control to thereby perform uplink communication.

<<5. Modification>>

The above-described embodiments are examples, and various modifications and applications are possible.

<5-1. Functional Separation>

The functions of the base station 20 and the transmission/reception device 30 of the present embodiment may be separated into a plurality of functions such as a central unit (CU), a distributed unit (DU), and a radio unit (RU). The CU/DU/RU separation of the functions of the base station 20 and the transmission/reception device 30 will be described below.

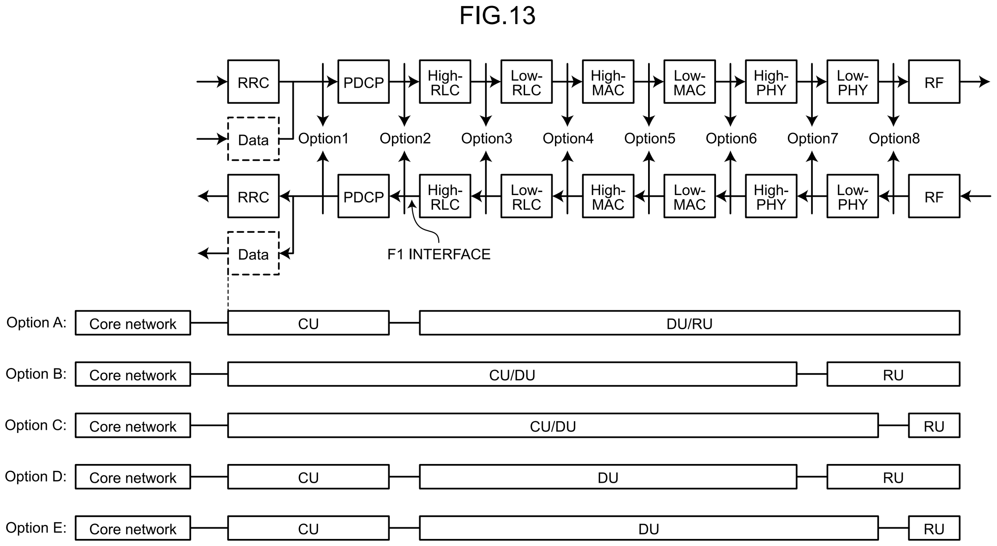

FIG. 13 is a diagram illustrating an example of CU/DU/RU separation of functions of the base station 20 according to another embodiment of the present disclosure. In the figure, CN represents a core network. In the current standard, the functions of the base station 20 (for example, gNB) are separated into two: a central unit (CU) and a distributed unit (DU). Here, the DU may include some or all of the functions known under names such as a radio remote head (RRH), a remote radio unit (RRU), and a radio unit (RU) as they were called in 3GPP LTE.

Currently, as illustrated in P1 of FIG. 13, a boundary (also referred to as a split point or a division point) between the CU and the DU is set between a packet data convergence protocol layer (PDCP layer) and a radio link control layer (RLC layer) in a 3GPP protocol stack (Option 2). In order to establish communication between the CU and the DU, "F1" is defined as an interface between these units in 3GPP. This interface is a logical interface. Communication between the CU and DU is established when IP packets are transmitted over, for example, Ethernet (IEEE 802.3).

In forming a user-centric network, for example, an entity (for example, a CU or a DU) such as the base station 20 that performs central control of the MAC layer and above may perform processing, and a group of transmission/reception devices serving as transmission/reception points may perform processing on the PHY layer and below.

For example, the processing (functions) of the central control entity and the group of transmission/reception devices may be separated using Option 6, Option 7, or Option 8 illustrated in FIG. 13. In a case where the processing is separated using the Option 6, the central control entity processes the LoW-MAC layer and above, and the group of transmission/reception devices processes the High-PHY layer and below. In a case where the processing is separated using the Option 7, the central control entity processes the High-PHY layer and above, and the group of transmission/reception devices processes the LoW-PHY layer and below. In a case where the processing is separated using the Option 8, the central control entity processes the LoW-PHY layer and above, and the group of transmission/reception devices processes the radio frequency layer (RF layer) and below. Of course, the separation of the processing is not limited thereto. The processing may be separated using another option (for example, any one of Option 1 to Option 5).

As an example, separation of processing (functions) such as Option A to Option E illustrated in FIG. 13 is possible. The separation of the processing is not limited to the following examples.

Option A: Example of separating CU and DU/RU using the Option 2
Option B: Example of separating CU/DU and RU using the Option 7
Option C: Example of separating CU/DU and RU using the Option 8
Option D: Example of separating CU and DU using the Option 2, and separating DU and RU using the Option 7
Option E: Example of separating CU and DU using the Option 2, and separating DU and RU using the Option 8

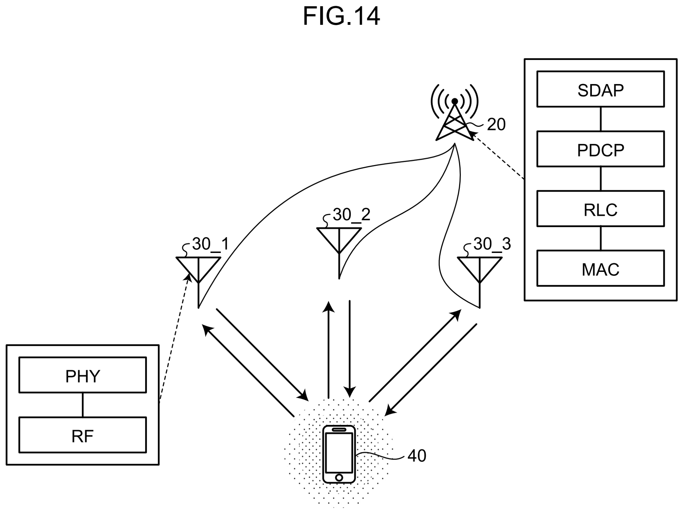

FIG. 14 is a diagram illustrating an example of separation of processing according to a user-centric network of another embodiment of the present disclosure. Specifically, in the example illustrated in FIG. 14, for example, in the Option 6, the processing of the central control entity and the group of transmission/reception devices is separated. In the example of FIG. 14, the central control entity (base station 20) processes the SDAP/PDCP/RLC/MAC layers, and each transmission/reception device 30 processes the PHY/RF layers.

An example will be described as to how the base station 20 and the transmission/reception device 30 are separated when the CU/DU/RU separation is performed. Here, it is also possible to apply the present invention by implementing all RAN protocols (SDAP/PDCP/RLC/MAC/PHY/RF layers) in both the base station 20 and the transmission/reception device 30 without performing the CU/DU/RU separation.

As a first example, the base station 20 processes a CU, and the transmission/reception device 30 processes a DU/RU (for example, Option A). As a second example, the base station 20 processes a CU/DU, and the transmission/-reception device 30 processes an RU (for example, Option A and Option B). As a third example, the base station 20 processes a CU, the transmission/reception device 30 processes a DU, and a distributed antenna possessed by the transmission/reception device 30 processes an RU (for example, Option D and Option E).

This enables efficient user-centric network processing.

<5-2. Other modifications>

The control device for controlling the base station 20, the transmission/reception device 30, and the terminal device 40 of the present embodiment may be implemented by a dedicated computer system or by a general-purpose computer system.

For example, a communication program for executing the operation described above is stored in a computer-readable recording medium such as an optical disk, a semiconductor memory, a magnetic tape, or a flexible disk, and distributed. Then, for example, the program is installed into a computer and the processing described above is executed, so that the control device is configured. At this time, the control device may be a device (for example, a personal computer) external to the base station 20, the transmission/reception device 30, or the terminal device 40. Further, the control device may be a device (for example, the control unit 23, the control unit 33, or the control unit 43) inside the base station 20, the transmission/reception device 30, or the terminal device 40.

In addition, the communication program may be stored in a disk device included in the server on the network such as the Internet so that the communication program can be downloaded to a computer. In addition, the above-described functions may be implemented by cooperation of an operating system (OS) and application software. In such a case, a portion other than the OS may be stored in a medium and distributed, or a portion other than the OS may be stored in the server and downloaded to the computer.

Among the processes described in the above embodiments, all or part of the processes described as being performed automatically can be performed manually, or all or part of the processes described as being performed manually can be performed automatically by a known method. In addition, the processing procedure, specific name, and information including various data and parameters illustrated in the above document and the drawings can be arbitrarily changed unless otherwise specified. For example, various types of information illustrated in each drawing are not limited to the illustrated information.

In addition, each component of each device illustrated in the drawings is functionally conceptual, and is not necessarily physically configured as illustrated in the drawings. In other words, a specific form of distribution or integration of each device is not limited to the illustrated form, and all or a part thereof can be functionally or physically distributed and integrated in an arbitrary unit according to various loads, usage conditions, and the like. Note that this configuration by distribution and integration may be performed dynamically.

In addition, the above-described embodiments can be appropriately combined in a region in which the processing contents do not contradict each other. Further, the order of the steps illustrated in the sequence diagrams of the embodiments may be changed as appropriate.

Further, for example, the present embodiment can be implemented as any configuration constituting an apparatus or a system, for example, a processor as a system large scale integration (LSI) or the like, a module using a plurality of processors or the like, a unit using a plurality of modules or the like, a set obtained by further adding other functions to a unit, or the like (i.e., configuration of a part of device).

Note that, in the present embodiment, the system means a set of a plurality of components (devices, modules (parts), etc.), and it does not matter whether or not all the components are in the same housing. Therefore, a plurality of devices housed in separate housings and connected via a network and one device in which a plurality of modules is housed in one housing are both systems.

Further, for example, the present embodiments can adopt a configuration of cloud computing in which one function is shared and processed by a plurality of devices in cooperation via a network.

<<6. Conclusion>>

Although the embodiments of the present disclosure have been described above, the technical scope of the present disclosure is not limited to the embodiments described above as it is, and various modifications can be made without departing from the gist of the present disclosure. In addition, constituent elements of different embodiments and modifications may be appropriately combined.

Note that the effects of each embodiment described in the present specification are merely examples and not limited thereto, and other effects may be provided.

The present technology may also have the following configurations.

(1) A terminal device comprising:

  a communication unit configured to communicate with a plurality of communication apparatuses; and
  a control unit configured to
  measure communication quality and/or propagation path characteristics with one or more of the communication apparatuses, and
  transmit data to one or more of the communication apparatuses at transmission power determined based on the communication quality and/or the propagation path characteristics.

(2) The terminal device according to (1), wherein the communication unit communicates with a plurality of the communication apparatuses cooperatively controlled.
(3) The terminal device according to (1), wherein the communication unit receives and/or transmits same data from and to each of the plurality of communication apparatuses.
(4) The terminal device according to any one of (1) to (3), wherein the control unit determines the transmission power based on the communication quality and/or the propagation path characteristics in uplink communication with at least one of the communication apparatuses.
(5) The terminal device according to any one of (1) to (4), wherein the control unit determines the transmission power based on the communication quality and/or the propagation path characteristics in downlink communication with at least one of the communication apparatuses.
(6) The terminal device according to any one of (1) to (5), wherein the control unit determines the transmission power based on a sum of the communication quality and/or the propagation path characteristics with one or more of the communication apparatuses.
(7) The terminal device according to any one of (1) to (5), wherein the control unit determines the transmission power based on the best communication quality and/or the best propagation path characteristics among the communication quality and/or the propagation path characteristics with one or more of the communication apparatuses.
(8) The terminal device according to any one of (1) to (5), wherein the control unit determines the transmission power based on the worst communication quality and/or the worst propagation path characteristics among the communication quality and/or the propagation path characteristics with one or more of the communication apparatuses.
(9) The terminal device according to any one of (1) to (5), wherein the control unit determines the transmission power based on an average of the communication quality and/or the propagation path characteristics with one or more of the communication apparatuses.
(10) The terminal device according to any one of (1) to (9), wherein the control unit determines the transmission power based on the communication quality and/or the propagation path characteristics with the communication apparatus randomly selected from one or more of the communication apparatuses.
(11) The terminal device according to any one of (1) to (10), wherein the control unit determines the transmission power based on the communication quality and/or the propagation path characteristics with one or more of the communication apparatuses selected by a base station.
(12) The terminal device according to any one of (1) to (11), wherein
the communication unit:

  performing initial access processing with a base station, and
  communicating with a plurality of the communication apparatuses notified from the base station.

(13) The terminal device according to any one of (1) to (11), wherein
the communication unit:

  performing initial access processing with one of the plurality of communication apparatuses, and
  communicating with a plurality of the communication apparatuses notified from the communication apparatus on which the initial access processing has been performed.

(14) A communication apparatus comprising:

  a communication unit configured to communicate with a terminal device that communicates with a plurality of communication apparatuses; and
  a control unit configured to
  transmit, to the terminal device, a measurement signal for measuring communication quality and/or propagation path characteristics, and
  receive data transmitted at transmission power determined in accordance with the communication quality and/or the propagation path characteristics measured by the terminal device using the measurement signal transmitted from one or more of the communication apparatuses.

(15) A base station comprising:

a communication unit configured to communicate with a plurality of communication apparatuses that communicates with a terminal device; and
a control unit configured to transmit, to one or more of the communication apparatuses, information indicating that communication with the terminal device is in a predetermined mode,
wherein
the terminal device:

measuring communication quality and/or propagation path characteristics with one or more of the communication apparatuses, and
transmitting data to one or more of the communication apparatuses at transmission power determined based on the communication quality and/or the propagation path characteristics.

(16) A communication method comprising:

communicating with a plurality of communication apparatuses;
measuring communication quality and/or propagation path characteristics with one or more of the communication apparatuses; and
transmitting data to one or more of the communication apparatuses at transmission power determined based on the communication quality and/or the propagation path characteristics.

(17) A communication method comprising:

communicating with a terminal device that communicates with a plurality of communication apparatuses;
transmitting, to the terminal device, a measurement signal for measuring communication quality and/or propagation path characteristics; and
receiving data transmitted at transmission power determined in accordance with the communication quality and/or the propagation path characteristics measured by the terminal device using the measurement signal transmitted from one or more of the communication apparatuses.

(18) A communication method comprising:

communicating with a plurality of communication apparatuses that communicates with a terminal device; and
transmitting, to one or more of the communication apparatuses, information indicating that communication with the terminal device is in a predetermined mode,
wherein
the terminal device:

measuring communication quality and/or propagation path characteristics with one or more of the communication apparatuses, and
transmitting data to one or more of the communication apparatuses at transmission power determined based on the communication quality and/or the propagation path characteristics.

Reference Signs List

20 BASE STATION
30 TRANSMISSION/RECEPTION DEVICE
40 TERMINAL DEVICE
21, 31, 41 WIRELESS COMMUNICATION UNIT
22, 32, 42 STORAGE UNIT
23, 33, 43 CONTROL UNIT
211, 311, 411 TRANSMISSION PROCESSING UNIT

212, 312, 412 RECEPTION PROCESSING UNIT
213, 313, 413 ANTENNA

**Claims**

1. A terminal device comprising:

    a communication unit configured to communicate with a plurality of communication apparatuses; and
    a control unit configured to
    measure communication quality and/or propagation path characteristics with one or more of the communication apparatuses, and
    transmit data to one or more of the communication apparatuses at transmission power determined based on the communication quality and/or the propagation path characteristics.

2. The terminal device according to claim 1, wherein the communication unit communicates with a plurality of the communication apparatuses cooperatively controlled.

3. The terminal device according to claim 1, wherein the communication unit receives and/or transmits same data from and to each of the plurality of communication apparatuses.

4. The terminal device according to claim 1, wherein the control unit determines the transmission power based on the communication quality and/or the propagation path characteristics in uplink communication with at least one of the communication apparatuses.

5. The terminal device according to claim 1, wherein the control unit determines the transmission power based on the communication quality and/or the propagation path characteristics in downlink communication with at least one of the communication apparatuses.

6. The terminal device according to claim 1, wherein the control unit determines the transmission power based on a sum of the communication quality and/or the propagation path characteristics with one or more of the communication apparatuses.

7. The terminal device according to claim 1, wherein the control unit determines the transmission power based on the best communication quality and/or the best propagation path characteristics among the communication quality and/or the propagation path characteristics with one or more of the communication apparatuses.

8. The terminal device according to claim 1, wherein the control unit determines the transmission power based on the worst communication quality and/or the worst propagation path characteristics among the communication quality and/or the propagation path characteristics with one or more of the communication apparatuses.

9. The terminal device according to claim 1, wherein the control unit determines the transmission power based on an average of the communication quality and/or the propagation path characteristics with one or more of the communication apparatuses.

10. The terminal device according to claim 1, wherein the control unit determines the transmission power based on the communication quality and/or the propagation path characteristics with the communication apparatus randomly selected from one or more of the communication apparatuses.

11. The terminal device according to claim 1, wherein the control unit determines the transmission power based on the communication quality and/or the propagation path characteristics with one or more of the communication apparatuses selected by a base station.

12. The terminal device according to claim 1, wherein
    the communication unit:

    performing initial access processing with a base station, and
    communicating with a plurality of the communication apparatuses notified from the base station.

13. The terminal device according to claim 1, wherein
    the communication unit:

    performing initial access processing with one of the plurality of communication apparatuses, and
    communicating with a plurality of the communication apparatuses notified from the communication apparatus on
    which the initial access processing has been performed.

14. A communication apparatus comprising:

    a communication unit configured to communicate with a terminal device that communicates with a plurality of
    communication apparatuses; and
    a control unit configured to
    transmit, to the terminal device, a measurement signal for measuring communication quality and/or propagation
    path characteristics, and
    receive data transmitted at transmission power determined in accordance with the communication quality and/or
    the propagation path characteristics measured by the terminal device using the measurement signal transmitted
    from one or more of the communication apparatuses.

15. A base station comprising:

    a communication unit configured to communicate with a plurality of communication apparatuses that communicates with a terminal device; and
    a control unit configured to transmit, to one or more of the communication apparatuses, information indicating that
    communication with the terminal device is in a predetermined mode,
    wherein
    the terminal device:

        measuring communication quality and/or propagation path characteristics with one or more of the communication apparatuses, and
        transmitting data to one or more of the communication apparatuses at transmission power determined based
        on the communication quality and/or the propagation path characteristics.

16. A communication method comprising:

    communicating with a plurality of communication apparatuses;
    measuring communication quality and/or propagation path characteristics with one or more of the communication
    apparatuses; and
    transmitting data to one or more of the communication apparatuses at transmission power determined based on
    the communication quality and/or the propagation path characteristics.

17. A communication method comprising:

    communicating with a terminal device that communicates with a plurality of communication apparatuses;
    transmitting, to the terminal device, a measurement signal for measuring communication quality and/or propagation path characteristics; and
    receiving data transmitted at transmission power determined in accordance with the communication quality
    and/or the propagation path characteristics measured by the terminal device using the measurement signal
    transmitted from one or more of the communication apparatuses.

18. A communication method comprising:

    communicating with a plurality of communication apparatuses that communicates with a terminal device; and
    transmitting, to one or more of the communication apparatuses, information indicating that communication with
    the terminal device is in a predetermined mode,
    wherein
    the terminal device:

        measuring communication quality and/or propagation path characteristics with one or more of the communication apparatuses, and
transmitting data to one or more of the communication apparatuses at transmission power determined based on the communication quality and/or the propagation path characteristics.

# FIG.1

# FIG.2

## FIG.3

## FIG.4

# FIG.5

# FIG.6

313

30

TRANSMISSION/RECEPTION DEVICE

31

WIRELESS COMMUNICATION UNIT

311

TRANSMISSION PROCESSING UNIT

312

RECEPTION PROCESSING UNIT

32

STORAGE UNIT

33

CONTROL UNIT

# FIG.7

413

40

## TERMINAL DEVICE

41

### SIGNAL PROCESSING UNIT

411

#### RECEPTION PROCESSING UNIT

412

#### TRANSMISSION PROCESSING UNIT

⋮

42

#### STORAGE UNIT

44

#### INPUT/OUTPUT UNIT

45

### CONTROL UNIT

## FIG.8

UE AVERAGE SE

## FIG.9

5%SE

FIG.10

# FIG.11

FIG.12

BASE STATION | THIRD TRANSMISSION/ RECEPTION DEVICE | SECOND TRANSMISSION/ RECEPTION DEVICE | FIRST TRANSMISSION/ RECEPTION DEVICE | TERMINAL DEVICE

NOTIFY THAT SYNCHRONIZATION SIGNAL AND SYSTEM INFORMATION ARE TRANSMITTED FROM FIRST TRANSMISSION/RECEPTION DEVICE — S101

SYNCHRONIZATION SIGNAL AND SYSTEM INFORMATION — S102

S103 — RECEIVE SYNCHRONIZATION SIGNAL AND SYSTEM INFORMATION

MEASURE PATH LOSS WITH FIRST TRANSMISSION/RECEPTION DEVICE BASED ON SYNCHRONIZATION SIGNAL — S104

TRANSMIT RANDOM ACCESS PREAMBLE — S105

RANDOM ACCESS RESPONSE — S106

TRANSMIT Message 3 — S107

Contention resolution — S108

TRANSMIT RRC signaling — S109

SRS TRANSMISSION Request — S110

TRANSMIT SRS — S111

S112

S113 — DETERMINE TRANSMISSION/RECEPTION DEVICE TO BE CONNECTED TO TERMINAL DEVICE BASED ON RECEIVED SRS

NOTIFY FORMATION OF USER-CENTRIC NETWORK — S114

NOTIFY THAT SECOND AND THIRD TRANSMISSION/ RECEPTION DEVICES ARE ADDITIONALLY CONNECTED — S115

NOTIFY CONTROL INFORMATION RELATED TO COMMUNICATION WITH SECOND AND THIRD TRANSMISSION/ RECEPTION DEVICES — S116

TRANSMIT CSI-RS — S117

S118

MEASURE PATH LOSS WITH TRANSMISSION/ RECEPTION DEVICE BASED ON CSI-RS

CALCULATE PATH LOSS COMPENSATION TERM IN TRANSMISSION POWER CONTROL — S119

TRANSMIT Scheduling Request (SR) — S120

TRANSMIT CONTROL INFORMATION — S121

S122 — CALCULATE PATH LOSS COMPENSATION TERM IN TRANSMISSION POWER CONTROL

TRANSMIT UPLINK DATA USING PUSCH OR THE LIKE — S123

PROCESSING END | PROCESSING END | PROCESSING END | PROCESSING END | PROCESSING END

43

FIG.13

EP 4 746 540 A1

FIG.14

## INTERNATIONAL SEARCH REPORT

| | International application No. |
|---|---|
| | **PCT/JP2024/022155** |

**A. CLASSIFICATION OF SUBJECT MATTER**

*H04W 52/18*(2009.01)i; *H04W 16/28*(2009.01)i; *H04W 24/10*(2009.01)i; *H04W 28/16*(2009.01)i
FI:   H04W52/18; H04W16/28; H04W24/10; H04W28/16

According to International Patent Classification (IPC) or to both national classification and IPC

**B. FIELDS SEARCHED**

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2013-42310 A (NTT DOCOMO, INC.) 28 February 2013 (2013-02-28) | 1-5, 14-18 |
| | paragraphs [0029]-[0096] | |
| Y | paragraphs [0029]-[0096] | 1-18 |
| X | WO 2013/047130 A1 (SHARP KABUSHIKI KAISHA) 04 April 2013 (2013-04-04) | 1, 6-18 |
| | paragraphs [0065], [0090]-[0097], [0258] | |
| Y | paragraphs [0065], [0090]-[0097], [0258] | 1-18 |
| A | JP 2015-70322 A (NTT DOCOMO, INC.) 13 April 2015 (2015-04-13) | 1-18 |
| | entire text | |
| A | WO 2013/129419 A1 (KYOCERA CORPORATION) 06 September 2013 (2013-09-06) | 1-18 |
| | entire text | |
| A | WO 2013/046965 A1 (SHARP KABUSHIKI KAISHA) 04 April 2013 (2013-04-04) | 1-18 |
| | entire text | |

☑ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **13 August 2024** | **27 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

# EP 4 746 540 A1

**INTERNATIONAL SEARCH REPORT**

International application No.

**PCT/JP2024/022155**

## C. DOCUMENTS CONSIDERED TO BE RELEVANT

| Category* | Citation of document, with indication, where appropriate, of the relevant passages | Relevant to claim No. |
|---|---|---|
| A | WO 2013/018857 A1 (SHARP KABUSHIKI KAISHA) 07 February 2013 (2013-02-07) entire text | 1-18 |

Form PCT/ISA/210 (second sheet) (July 2022)

## INTERNATIONAL SEARCH REPORT
### Information on patent family members

International application No.

**PCT/JP2024/022155**

| Patent document cited in search report | | | Publication date (day/month/year) | Patent family member(s) | | | Publication date (day/month/year) |
|---|---|---|---|---|---|---|---|
| JP | 2013-42310 | A | 28 February 2013 | US | 2014/0179363 | A1 | |
| | | | | paragraphs [0042]-[0109] | | | |
| WO | 2013/047130 | A1 | 04 April 2013 | US | 2014/0247796 | A1 | |
| | | | | paragraphs [0102], [0127]-[0134], [0304] | | | |
| JP | 2015-70322 | A | 13 April 2015 | US | 2016/0242127 | A1 | |
| | | | | entire text | | | |
| WO | 2013/129419 | A1 | 06 September 2013 | US | 2015/0304961 | A1 | |
| | | | | entire text | | | |
| WO | 2013/046965 | A1 | 04 April 2013 | US | 2014/0241301 | A1 | |
| | | | | entire text | | | |
| WO | 2013/018857 | A1 | 07 February 2013 | US | 2014/0169322 | A1 | |
| | | | | entire text | | | |

Form PCT/ISA/210 (patent family annex) (July 2022)

**REFERENCES CITED IN THE DESCRIPTION**

**Patent documents cited in the description**

- JP 2016502331 A
- JP 2016213846 A